# EUROPEAN PATENT SPECIFICATION

(11) **EP 2 630 790 B1**
(45) Date of publication and mention of the grant of the patent: **25.04.2018**
(21) Application number: 11834564.4
(22) Date of filing: 11.10.2011
(51) Int. Cl.: H04N 5/44, H04N 5/445, H04N 7/173

(54) **METHOD FOR MOVING POINTER IN VIDEO DISPLAY APPARATUS AND VIDEO DISPLAY APPARATUS THEREOF**
VERFAHREN ZUM BEWEGEN DES ZEIGERS IN EINER VIDEOANZEIGEVORRICHTUNG UND VIDEOANZEIGEVORRICHTUNG
PROCÉDÉ PERMETTANT DE DÉPLACER UN POINTEUR DANS UN APPAREIL D'AFFICHAGE VIDÉO ET APPAREIL D'AFFICHAGE VIDÉO ASSOCIÉ

(30) Priority: 04.03.2011 US 201161449100 P; 20.10.2010 KR 20100102308
(43) Date of publication of application: 28.08.2013
(73) Proprietor: LG Electronics Inc., Yeongdeungpo-gu Seoul 150-721 (KR)
(72) Inventor: KIM, Kihoon, Seoul 137-724 (KR)
(74) Representative: Frenkel, Matthias Alexander
(86) International application number: PCT/KR2011/007532
(87) International publication number: WO 2012/053764

(56) References cited:
- WO-A1-2008/081512
- JP-A- 2002 290 533
- JP-A- 2006 058 946
- KR-A- 20080 035 041
- KR-A- 20090 052 260
- US-A1- 2005 195 221
- US-A1- 2005 210 399

## Description

### Technical Field

The present invention relates to a method for moving a pointer displayed on a browser in a video display apparatus.

### Background Art

Recently, digital TV services using wire or wireless networks are becoming more common. The digital TV services may provide various services which could not provide in the existing analog broadcasting service.

For example, one kind of TV digital services, IPTV (Internet Protocol Television) service allows users to actively select kinds of programs, viewing time, and the like to provide interactivity. The IPTV service may provide various additional services, for example, searching the internet, home shopping, online games and the like based on the interactivity.

US 2005/195221 discloses a system for facilitating presentation of content on a communication device display. Raster images may be displayed side-by-side and may be segmented into segments which may be selected for viewing in an enhanced viewing mode such as enlargement. A user can select a segment by moving a cursor into the segment and selecting the segment, which is then displayed enlarged on the display. Alternatively, a user can use a mouse, trackball, joystick, or other scrolling mechanism to sweep out an area using click-and-drag or snapping to cause zooming in to the selected area. A label may be provided and a user may select the area by entering the number displayed on the label.

JP 2002/290553 discloses to display a segmented map and to enlarge a segment corresponding to a number key of the device.

JP 2006/058946 discloses a configuration in which a plurality of pointers can be controlled by a plurality of devices. An amount of movement of each pointer is controlled such that a user can press a menu key to cause a pointer to move a larger amount in response to a key input. Nine number keys are mapped to areas of the display so that pressing one of the number keys causes the pointer to be displayed in the region of the display corresponding to the pressed number key.

US 2005/210339 discloses scaling web content so that a user can scroll in one direction to view the content. Cells of a grid may be arranged and a user can navigate among the regions using a four-way navigation button to select a desired region for enlargement.

### Disclosure

### Technical Problem

An object of the present invention is to provide a pointer movement method and a video display apparatus thereof in which the user may easily move the pointer to a user' desired position by using the remote controller on browsing screen of the video display apparatus.

### Technical Solution

A pointer movement method and a video display apparatus according to the appended independent claims are provided. The pointer movement method may include receiving a screen split request signal, displaying screen split lines in which a plurality of areas are split by partitioning a browser screen according to the screen split request signal, and displaying a pointer on an area performing a specific function included in a specific split area among a plurality of split areas.

The pointer movement method may include a display unit which displays a browser screen, a user input interface unit which receives a screen split request signal, and a control unit which controls so as to display screen split lines into which a plurality of areas are split by partitioning the browser screen according to the screen split request signal received in the user input interface unit, on the display unit and controls so as to display a pointer on an area performing a specific function included in a specific split area among a plurality of split areas.

Meanwhile, a video display apparatus may include a storage unit which stores a program for performing the pointer movement method and, a control unit which performs the program stored in the storage unit.

The pointer movement method may be implemented with a computer readable recording medium recorded thereon a program executed by a computer.

### Advantageous Effects

According an embodiment of the present invention, after a screen split request signal is input, a first displayed pointer P may be displayed on a specific split area located on the center of the plurality of split areas and the specific function performance area located on the center of the plurality of function performance areas included in the specific split area, thereby minimizing the inconvenience in which the user presses the direction key for long time for performing the specific function on the browser screen.

### Description of Drawings

FIG. 1 is a diagram schematically showing a first embodiment of the configuration of a broadcast system.
FIG. 2 is a diagram schematically showing another embodiment of the configuration of a broadcast system.
FIG. 3 is a diagram showing a first embodiment of data transmitting and receiving method between a video display apparatus and a service provider.
FIG. 4 is a block diagram showing the configuration of a video display apparatus according to an embodiment of the present invention.
FIG. 5 is a block diagram showing the configuration of a video display apparatus according to another embodiment of the present invention.
FIG. 6 is a diagram showing embodiments regarding a platform structure of a video display apparatus.
FIG. 7 is a diagram schematically showing a configuration of a key pad of a remote control device according to the prevent invention.
FIG. 8 is a flow chart showing a first embodiment of a pointer movement method according to present invention.
FIGS. 9 to 19 are diagrams schematically showing a browser screen of a video display apparatus according to the present invention.
FIG. 20 is a flow chart showing another embodiment of a pointer movement method according to present invention.
FIGS. 21 to 27 are diagrams schematically showing a browser screen of a video display apparatus according to another embodiment of the present invention.

### Best Mode for Carrying out the Invention

Hereinafter, a method of providing a network service providing method and a video display apparatus thereof according to an embodiment of the present invention will be described in detail with reference to the accompanying drawings

A video display apparatus according to an embodiment of the present invention, for example, as an intelligent video display apparatus having both of the broadcast reception function and the computer assisted function, may include more convenient user-friendly interface than a handwriting input apparatus, a touch screen or space remote controller, and the like, by adding an internet function while fulfilling a broadcasting receiving function. In addition, the video display apparatus may also perform on E-mail, a web browsing, Internet banking or games, and the like by connecting to an Internet and computer supporting a wired or wireless internet function. In order to perform various functions described above, a general purpose operation system (OS) may used.

Therefore, in the video display apparatus described in the present invention, since various applications may be freely added or deleted on a general OS Kernel, various user-friendly functions may be performed. More specifically, the video display apparatus may be, for example, a network TV, a HBBTV, a smart TV and the like, may be applied in a smart phone in some cases.

Furthermore, embodiments of the present invention will be described in detail later with reference to the accompanying drawings, but the embodiments of the present invention are not restricted or limited.

The terms used herein are selected by general terms new widely used for the technological field taking into account functions in the present invention, but, those may be varied depending on the technician's intentions engaged in the art, practices or the advent of new technologies. In addition, terms randomly selected by the applicant are used in specific case, and in this case, its meaning will be described in the corresponding description of the invention. Therefore, it is noticed that the terms used in the specification may be interpreted based on the real meanings of the terms and the contents throughout the specification.

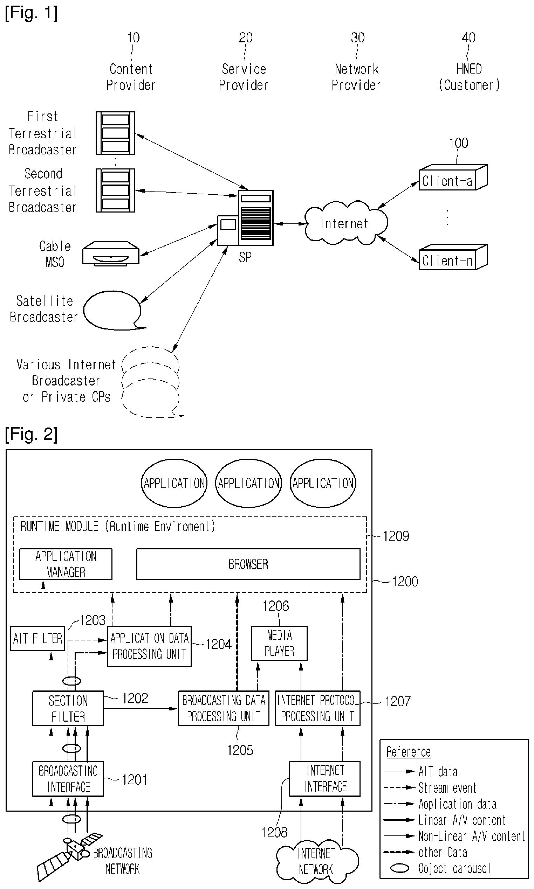

FIG. 1 is, as showing a first embodiment for a configuration of a broadcast system, a diagram schematically illustrating an example of the entire broadcast system including a video display apparatus according to the first embodiment of the present invention.

Referring to FIG. 1, the broadcast system may be separated by a content provider (CP) 10, a service provider (SP) 20, a network provider (NP) 30 and HNED 40.

The HNED 40 may correspond to a client 100 of a video display apparatus according to the embodiment of the present invention, for example, the client 100 may be a network TV, a smart TV, an IPTV, and the like.

Meanwhile, the content provider 10, which produces and provides various contents, may be terrestrial broadcasters, a cable system operator (SO) or a multiple system operator (MSO), a satellite broadcaster, various internet broadcasters, or the like as shown in FIG. 1.

In addition, the content provider 10 may provide various applications together with broadcast contents. An explanation with respect to these will be described in more detail later.

The service provider 20 may provide by service packaging contents provided by the content provider 10. For example, the service provider 20 may provide by packaging a first terrestrial broadcasting, a second terrestrial broadcasting, the cable MSO, the satellite broadcasting, various internet broadcasting, applications, and the like, to the user.

Meanwhile, the service provider 20 may provide services to the client 100 by using the unicast or multicast manner.

The unicast manner is a way of transmitting data between one sender and one recipient in one-to-one transmission. For example, in case of the unicast manner, when requesting data from the receiver to the server, the server may transmit the data to receiver according to the request.

The multicast manner is a manner transmitting the data to a plurality of recipients of a particular group, for example, the server may transmit data to a plurality of receivers already registered, at once. An internet group management protocol (IGMP), and the like may used for such a multicast registration.

The network provider 30 may provide a network terminal providing services such as described above to the client 100, and the client 100 may be received for services by establishing the Home Network End User (HNED)

A conditional access or content protection, or the like may be used as means for protecting content transmitted in the system described above. A cable card, a downloadable conditional access system (DCAS), and the like may be used as one example for protecting the content or the conditional access.

Meanwhile, the client 100 may also provide contents through a network, in this case, the client 100 may be the content provider, and the content provider 10 may also receive the contents from the client 100. As a result, an interactive content service or data service may be provided.

According to the embodiment of the present invention, the content provider 10 may provide network services such as a social network site (SNS), a blog, a micro blog or an instant messenger, and the like.

For example, the content provider 10 providing the SNS service may include a server (not shown) storing various types of contents such as created texts or uploaded videos in the social network site (SNS) by the plurality of users.

More specifically, the user connects to the server of the content provider 10 providing the SNS service by using the video display apparatus and specifies a plurality of desired accounts, such that the user may confirm the created massages by the plurality specified accounts.

In addition, when the user requests the SNS service, the video display apparatus, the client 100, connects to the server of the content provider 10, receives messages of the specified accounts, and arranges and displays the received message in the order in which the corresponding messages are created, sequentially, for example, in a downward motion.

Referring to FIG. 2, the video display apparatus 100 corresponding to the client shown in FIG. 1 may connect to a broadcasting network and an internet network.

For example, the video display apparatus 100 may include a broadcasting interface 101, a section filter 102, an AIT filter 103, an application data processing unit 104, a broadcasting data processing unit 105, a media player 106, an internet protocol processing unit 107, an internet interface 108, and a run time module 109.

Meanwhile, the broadcasting interface 101 of the video display apparatus 100 may receives an application information table data, real time broadcasting content, application data or a stream event, and the like, and the real time broadcasting content may be a linear A/V content.

The section filter 102 may perform a section filtering for four data received from the broadcasting interface 101, transmit the AIT data to the AIT filter 103, transmit a linear A/V content to the broadcasting processing unit 105, and transmit a stream event and an application data to the application data processing unit 104.

The internet interface 108 may receives a non-linear A/V content and an application data, for example, the non-linear A/V content may be content on demand (COD) application.

Meanwhile, the non-linear A/V content is transmitted to the media player 106, and the application data may be transmitted to the run time module 109.

In addition, the run time module 109 may include an application manager and a browser, the application manager may control a life cycle for an interactive application using AIT data, and the browser may display the interactive application and perform the processing function.

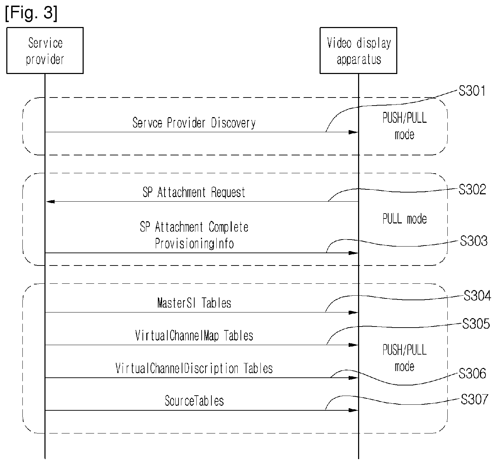

FIG. 3 is a diagram showing an embodiment of a method of transmitting and receiving data between a video display apparatus and a service provider.

Referring to FIG. 3, the service provider performs the operation of a service provider discovery S301. The video display apparatus transmits a service provider (SP) attachment request signal S302. When completing the SP attachment, the video display apparatus receives provisioning information (S303). Furthermore, the video display apparatus receives master SI tables (S304), receives virtual channel map tables (S305), receives virtual channel description tables (S306) and receives source tables (S307), from the service provider.

For example, the service provider discovery may mean the process of finding the server which provides the information for their services by service providers providing the service relative to the IPTV.

A method of finding an address list capable of receiving the information (for example, SP discovery information) for the service discovery (SD) server is, for example, the following three methods. First, the address pre-set in the video display apparatus or the address set by a manual operation of the user may be used. Second, a SP discovery method based on DHCP may be used. Third, a DNS SRV-based SP discovery method may be used.

In addition, the video display apparatus connects to a server of the address obtained by any one of the three methods, receives a service provider discovery record including the information needed in service discovery for each SP, and processes the service searching by using the service provider discovery record. Meanwhile, the process described above may be performed on both of a push mode and a pull mode.

Meanwhile, the video display apparatus connects to the SP attachment server designated by a SP attachment locator of the SP discovery record and performs registration procedures (or service attachment procedures).

In addition, the video display apparatus is connected to an SP authentication service server designated by a SP authentication locator, and may performs the service authentication after performing the separate authentication procedure.

After completing the service attachment procedure, data from the server to the video display apparatus may be a type of provisioning information table.

During the service attachment procedure, the video display apparatus provides data transmitted in the server with ID of itself and location information and the service attachment server may specifies a service to which the video display apparatus has subscribed based on the ID and the location information.

Address information capable of obtaining the service information to be received from the video display apparatus may be provided as a type of a provisioning information table. Meanwhile, the address information may be corresponded to connection information of a mater SI table. In this case, a personalized service per subscriber may be provided easily.

In addition, the service information may includes a master SI table record which manages a connection information and version for a virtual channel map, a virtual channel map table which provides service lists of a package type, a virtual channel description table which includes detail information of each of channels, a source table which includes connection information to access actual services, and the like.

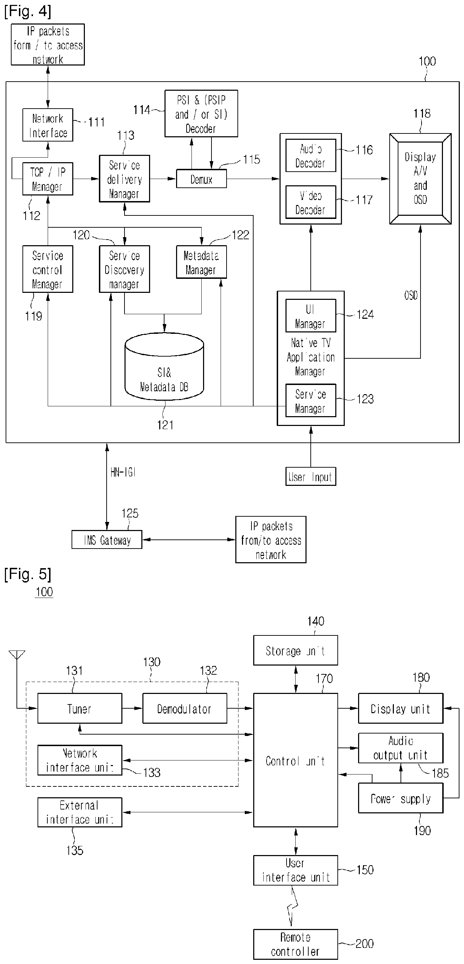

FIG. 4 is a block diagram showing the configuration of a video display apparatus according to an embodiment of the present invention.

Referring to FIG. 4, the video display apparatus 100 may includes a network interface unit 111, a TCP/IP Manager 112, a service delivery manager 113, a demultiplexer (Demux) 115, a PSI & (PSIP and/or SI) decoder 114, an audio decoder 116, a video decoder 117, a display A/V and OSD module 118, a service control manager 119, a service discovery manager 120, a metadata manager 122, a SI & Metadata DB 121, an UI manager 124 and a service manger 123.

The network interface unit 111 may receives and transmit packets from and to the network terminal. That is, the network interface unit 111 may receive services and contents, and the like from the service provider through the network.

The TCP/IP manger 112 may be concerned with a packet received in the video display apparatus 100 and a packet transmitted by the video display apparatus 100, that is, the packet transmission from the source to the destination. In addition, the TCP/IP manager 112 classifies the received packets to correspond to proper protocols, and may output the classified packets from the service delivery manger 113, the service discovery manger 120, the service control manager 119 and the metadata manger 122.

Meanwhile, the service delivery manger 113 is responsible for control of the received service data and, for example, when controlling real-time streaming data, RTP/RTCP may be used.

When the real-time streaming data is transmitted using the RTP, the service delivery manger 113 parses the received data packets according to the RTP, and transmits to the multiplexer 115 or stores in the SI & metadata DB 121 according to the control of the service manager 123. In addition, the service delivery manger 113 may feed back the network receiving information to the service providing server by using the RTCP.

The demultiplexer 115 demultiplexes the received packets to audio, video, program specific information data, and the like, and may transmit to the audio/video decoder 116, 117 and PSI & (PSIP and/or SI) decoder 114, respectively.

The PSI & (PSIP and/or SI) decoder 114 may decode the service information such as a program specific information (PSI), and for example, receive and decode a PSI section, a program and service information protocol (PSIP) section or a service information (SI) section, and the like, demultiplexed in demultiplexer 115.

In addition, the PSI & (PSIP and/or SI) decoder 114 decodes the received sections, produces a database of the service information, and stores the database of the service information into SI & metadata DB 121.

The audio/video decoder 116, 117 may decode video data and audio data in the demultiplexer 115, and the user may be provided with the decoded audio data and video data through the display unit 118.

Meanwhile, the UI manger 124 and the service manger 123 manage the overall state of the video display apparatus 100, and provide a user interface, and manage another manager.

For example, the UI manager 124 provides a graphic user interface (GUI) for the user by using the on screen display (OSD), and may perform the operation of the receiver according to key input form the user. In addition, when the UI manger 124 receives the key input with regard to the channel selection from the user, the UI manager 124 may transmit the key input signal to service manager 123.

The service manger 123 may control managers associated with services such as a service delivery manager 113, the service discovery manager 120, the service control manager 119 and Meta data manager 122.

In addition, the service manager 123 may create the channel map and select the channels by using the channel map according to the received key input from the user interface manager 124.

Further, the service manager 123 may receive the service information of the channel from the PSI & (PSIP and/or SI) decoder 114, and set an audio/video packet identifier (PID) of the selected channel to demultiplexer 115.

The service discovery manager 120 may provide the information necessary to select the service provider providing the service. For example, the service discovery manager 120 may find the service by using the received signal when receiving a signal relative to channel selection from the service manager 123.

Meanwhile, the service control manager 119 is responsible for selecting and controlling of the service. For example, the service control manager 119 may select and control by using the IGMP or RTSP when the user selects a live broadcasting service such as the existing broadcasting manner, and by using the RTSP when selecting a service such as the video on demand (VOD).

The RTSP protocol may provide a trick mode for the real-time streaming, and the service control manager 119 may initiate and manage a session through an IMC gateway by using an IP multimedia subsystem (IMS) and a session initiation protocol (SIP).

The metadata manager 122 may manage a metadata associated with a service and store the metadata in SI & Metadata DB 711.

In addition, SI & Metadata DB 121 may store the information necessary to select the service information decoded by the PSI & (PSIP and/or SI) decoder 114, the metadata managed by the metadata manager 122, and the service provider provided by the service discovery manager 120.

Further, the SI & Metadata DB 121 may store a setup data and the like for a system. For example, the SI & Metadata DB 121 may be implemented by a nonvolatile memory (NVRAM) or flash memory, and the like.

Meanwhile, the IG 750 may be a gateway gathering functions necessary to access an IMS- based IPTV service.

FIG. 5 is a block diagram showing the configuration of a video display apparatus according to another embodiment of the present invention.

Referring to FIG. 5, the video display apparatus 100 may includes a broadcast receiving unit 130, an external interface unit 135, a storage unit 140, a user input interface unit 150, a control unit 170, a display unit 180, an audio output unit 185 and a power supply 190. Meanwhile, the broadcast receiving unit 130 may include a tuner 131, a demodulator 132 and a network interface unit 133.

The tuner 131 may select RF broadcasting signals corresponding to the selected channel by the user or all channels already stored among radio frequency (RF) broadcasting signals received though the antenna, and convert the selected RF broadcast signals into intermediate frequency signals or baseband video or audio signals

For example, when the selected RF broadcast signal is a digital broadcast signal, the tuner 131 may convert the selected RF broadcast signal into a digital IF signal (DIF), when the selected RF broadcast signal is an analog broadcast signal, the tuner 131 may convert the selected RF broadcast signal into an analog baseband video or audio signal (CVBS/SIF).

That is, the tuner 131 may process both of the digital broadcast signal and the analog broadcast signal. Further, the analog baseband video or the audio signal CVBS/SOF output from the tuner 131 may be directly input to the control unit 170.

In addition, the tuner 131 may receive RF broadcast signals of a single carrier according to advanced television system committee (ATSC) way or, RF broadcast signals of a plurality of carriers according to Digital Video Broadcasting) (DVB) way.

Meanwhile, the tuner 131 may sequentially select the RF broadcast signals of all broadcast channels stored through the channel memory function among RF broadcast signals received by an antenna and convert the selected signals into intermediate frequency signals or baseband video or audio signals.

The demodulator 132 may receive the converted digital IF signal DIF from the tuner 131 and perform the demodulation operation. For example, when digital IF signal output from the tuner 131 is ATSC system, the demodulator 132 may perform 8-vestigal side band (8-VSB) demodulation.

In addition, the demodulator 132 may perform the channel decoding. To this end, the demodulator 132 may perform a Trellis Encoder, a DeInterleaving and a Reed-Solomon Decoder by including a Trellis Decoder, a Deinterleaver, a Reed Solomon Decoder, and the like.

For example, when digital IF signal output from the tuner 131 is DVB system, the demodulator 132 may perform Coded Orthogonal Frequency Split Modulation (COFDMA) demodulation.

In addition, the demodulator 132 may perform the channel decoding. To this end, the demodulator 132 may perform a convolution decoding, a deinterleaving and a reed-solomon decoding by including a Convolution Decoder, a Deinterleaver, a Reed Solomon Decoder, and the like.

The demodulator 132 may output a stream signal (TS) after the demodulating and channel decoding. The stream signal may be multiplexed signal multiplexing the video signal, audio signal or data signal.

For example, the stream signal may be the multiplexed MPEG-2 transport stream (TS) multiplexing MPEG-2 standard video signal, audio signal of Dolby AC-3 standards, and the like. Specifically, the MPEG-2 TS may include 4-bytes header and 184 bytes payload.

Meanwhile, the demodulator 132 may separately include an ATSC demodulator and a DVB demodulator, respectively, according to ATSC system or DVB system

The stream signal output from the demodulator 132 may be input to the control unit 170. Further, the control unit 170 may output the video to the display unit 180 and output the audio to the audio output unit 185, respectively, after the demultiplexing, the video and audio signal processing, and the like.

The external interface unit 135 may connect an external device and the video display apparatus 100. To this end, the external interface unit 135 may include A/V input and output unit (not shown) or wireless communication unit (not shown), and the like.

The external interface unit 135 may access the external devices such as a Digital Versatile Disk (DVD), a Blu ray, a game device, a camera, a camcorder, a computer (notebook), and the like through wired or wireless.

In addition, the external interface unit 135 may transmit the video, audio or data signal input from the outside through the connected external device to the control unit 170 of the video display apparatus 100 and output the proceed video, audio or data signals in the control unit 170 to the connected external device.

The A/V input and output unit may include a USB terminal, a composite video banking sync (CVBS) terminal, a component terminal, S-video terminal (analog), a digital visual interface (DVI) terminal, a high definition multimedia interface (HDMI) terminal, a RGB terminal, a D-SUB terminal and the like so as to input the video and audio signals of the external devices to the video display apparatus.

Meanwhile, the wireless communication unit may perform short-range wireless communications with other electronic devices. For example, the video display apparatus 100 may be connected to the network with other electronic devices according to communication standards such as Bluetooth, Radio Frequency identification (RFID), Infrared Data Association (IrDA), Ultra Wideband (UWB), ZigBee, Digital Living Network Alliance (DLNA), and the like.

In addition, the external interface unit 135 may be connected to a variety of set-top boxes through at least one of the above-mentioned various terminals, and perform input and output operations with the set-top boxes.

Meanwhile, the external interface unit 135 may receive applications or application lists in adjacent the external devices and transmit the received applications or application lists to the control unit 170 or the storage unit 140.

The network interface unit 133 may provide an interface for connecting the video display apparatus 100 to a wired or wireless network including Internet. For example, the network interface unit 133 may include an Ethernet terminal for connection to a wire network, and the like, and connect to the wireless network by using Wireless LAN (WLAN) (Wi-Fi), Wireless broadband (Wibro), World Interoperability for Microwave Access (Wimax), High Speed Downlink Packet Access (HSDPA) communication standards, and the like.

Meanwhile, the network interface unit 133 may transmit or receive data to and from another user or another electronic device through a connected network or another network linked to the connected network.

In addition, a portion of content data stored in the video display apparatus 100 may be transmitted to a selected user or a selected electronic device among another user or another electronic device already registered in the video display apparatus 100.

The network interface unit 133 may access a predetermined Web page through a connected network or another network linked in the connected network. That is, by connecting to the predetermined Web page through the network, data may be transmitted or received to or from the corresponding server.

In addition, the network interface unit 133 may receive contents or data provided by a content provider or a network operator. That is, the network interface unit 133 may receive contents such as movies, advertising, games, VOD, broadcast signals, and the like and information associated with the contents, which are provided by content providers or network operators through the network.

In addition, the network interface unit 133 may receive update information or update files of firmware provided by network operators, and transmit the data internet or content providers or network operators.

The network interface unit 133 may select and receive desired applications of opened applications in the air through the network.

The storage unit 140 may store programs for processing and controlling each of the signals in the control unit 170 and store the processed video, audio and data signals.

Further, the storage unit 140 may temporarily serve to store video, audio or data signals input from the external interface unit 135 or the network interface unit 133 and store information associated with the predetermined broadcast cannel through the channel memory function.

The storage unit 140 may store applications or application lists input from the external interface unit 135 or the network interface unit 133.

The storage unit 140 may include, for example, at least one type of storage medium such as a flash memory type, a hard disk type, a multimedia card micro type, card type of memories(for example, SD or XD memories, and the like), a RAM, a ROM(EEPROM, and the like)

The video display apparatus 100 may reproduce content files (video files, still video files, music files, document files, application files, etc.) stored in the storage unit 140 and provide the reproduced content files to the users.

The user input interface unit 150 may transmit input signals input by the user to the control unit 170 or, transmit the signals from the control unit 170 to the user. For example, the user input interface unit 150 may process to receive control signals such as power on/off, channel selection, screen setting, and the like from the remote control device 200 according to various communication standards such as the radio frequency (RF) communication standard or the infrared (IR) communication standard, or the like, or process to transmit control signals from the control unit 170 to the remote control device 200.

In addition, the user input interface unit 150 may transmit the control signals input from local key (not shown) such as power key, channel key, volume key, setting key, and the like to the control unit 170.

For example, the user input interface unit 150 may transmit the control signal input from a sensing unit (not shown) to sense the user's gestures to the control unit 170, or transmit signals from the control unit 170 to the sensing unit (not shown). Meanwhile, the sensing unit (not shown) may include a touch sensor, an audio sensor, a position sensor, a motion sensor, and the like.

The control unit 170 may demultiplex streams input from the tuner 131 or the demodulator 132 or the external interface unit 135, or process the demultiplexed signals, and produce and output the signals for video or audio output.

The processed video signal in the control unit 170 may input the display unit 180, and display a video corresponding to the video signal. Further, the processed video signal from the control unit 170 may be input to the external output device through the external interface unit 135.

Further, the processed audio signal in the control unit 170 may be output to the audio output unit 185. Further, the processed audio signal in the control unit 170 may be input to the external output device through the external interface unit 135.

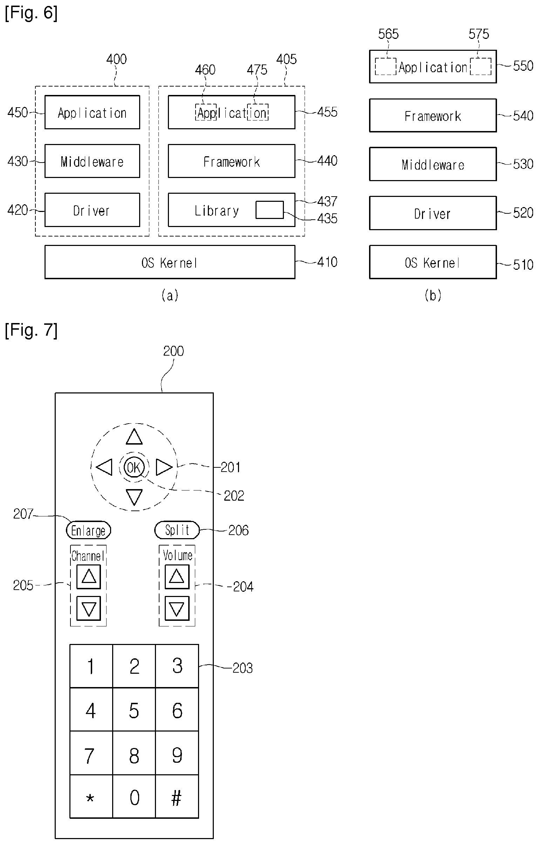

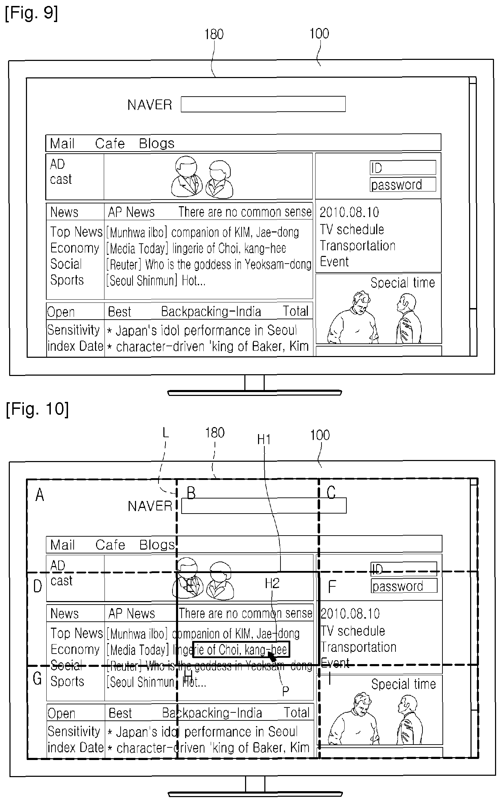

Although not shown in FIG. 6, the control unit 170 may include a demultiplexer, video processing unit, and the like. The relevant explanation will be described with reference to FIG. 10 later.

In addition, the control unit 170 may control the overall operation within the video display apparatus 100. For example, the control unit 170 may control to tune the RF broadcasting corresponding to a channel selected by the user or already stored channel by controlling the tuner 131.

In addition, the control unit 170 may control the video display apparatus 100 by the user command through the user input interface unit 150 or an internal program. Further the control unit 170 may access to a network so that the user may download desired applications or application lists into the video display apparatus 100

For example, the control unit 170 may control the tuner 131 to be input the signal of selected channel according to predetermined channel selection command through the user input interface unit 150 and process video, audio or data signals of selected channel.

The control unit 170 may serve to output channel information, and the like selected by the user together with the processed video or audio signals through the display unit 180 or the audio output unit 185.

In addition, the control unit 170 may serve to output the video or audio signals from the external devices, which is a camera or camcorder, received through external interface unit 135, through the display unit 180 or the audio output unit 185, according to the external video reproducing command received through the user input interface unit 150.

Meanwhile, the control unit 170 may control the display unit 180 to display the video. For example, the control unit 170 may control so as to display broadcasting video input through the tuner 131, or external input video input through the external interface unit 135, or video input through the network interface unit, or video stored in the storage unit 140 on the display unit 180. In this case, the video displayed on the display unit 180 may be moving video or still video, or 2D or 3D videos.

In addition, the control unit 170 may control to reproduce contents stored in the video display apparatus 100, or received broadcast contents, and external input contents from the outside. The contents may be in various forms such as broadcast video, external input video, audio file, still video, a connected web screen, and a document file.

The control unit 170 may control to display a home screen on display unit 180 according to an input of movement into the home screen.

The home screen may include a plurality of card objects classified by each of the content sources. The card object may include at least one content, for example, which may be a card object indicating a thumbnail list of the broadcast channel, a card object indicating the broadcast guide list, a card object indicating a broadcast reservation list and a record list, a card object indicating a media list in the video display apparatus or a device connected to the video display apparatus and the like. In addition, a card object indicating a connected external device list, a card object indicating a list associated with call and the like are further display on the home screen.

In addition, the home screen may further include an application menu having at least one executable application item.

Meanwhile, when a movement of a card object is input, the control unit 170 may control so as to display a card object representing by moving the card object or a card object not representing on display unit 180, on display unit 180 by the movement.

When a predetermined card object of a plurality of the card objects in the home screen is selected, the control unit 170 may control to display a video corresponding to the card object on the display unit 180.

The control unit 170 may control to display a received broadcast video and an object representing information associated with the corresponding broadcast video to the card object representing the broadcast video. In addition, such a broadcast video may control to fix its size by lock setting.

Further, the control unit 170 may control to display setup objects for at least one setting of video setting, audio setting, a screen setting, a reservation setting in the video display apparatus, a pointer setting of the remote control device, and a network setting in the home screen and to display objects for Login, Help, Exit items in an area of the home screen.

Meanwhile, the control unit 170 may control so as to display an object representing the number of entire card objects or representing the number of card objects displayed on display unit 180 among the entire card objects in an area of the home screen.

When a name of a card object within predetermined card objects of card objects displayed on display unit 180 is selected, the control unit 170 may control so as to display the corresponding card object as a full screen on the display unit 180.

When an incoming call is received in connected external device or video display apparatus, the control unit 170 may control to display by focusing a card object associated with the call among the plurality of the card objects or by moving the card object associated with the call into the display unit 180.

Meanwhile, when entering into an application view item, the control unit 170 may control to display downloadable applications or application lists into the video display apparatus 100 or from the external network.

The control unit 170 may control so as to install or drive applications downloaded from external networks with various user interfaces. In addition, videos associated with the performed application may be controlled so as to be displayed on the display unit 180 by the user' selection.

Meanwhile, although not shown in FIG. 5, the video display apparatus 100 may further include a channel browsing processing unit which generates the thumbnail video corresponding to the channel signal or the external input signal.

The channel browsing processing unit may receive stream signal TS output from demodulator 132 or stream signal output from the external interface unit 135 and extract videos from input stream signals to generate the thumbnail video.

The generated thumbnail video may be also input to the control unit 170 as it is or in being encoded, or in being encoded in the form of a stream.

The control unit 170 may control to display thumbnail lists including a plurality of the thumbnail videos on the display unit 180 by using the input thumbnail videos, and the thumbnail videos in the thumbnail list may be updated in turn or simultaneously. Accordingly, the user may easily identify information of the plurality of the broadcast channels.

The display unit 180 may generate driving signals by converting video signals, data signals, OSD signals processed from the control unit 170 or video signals, data signals, and the like received from the external interface unit 135 into R, G, B signals, respectively,

To this end, the display unit 180 may use a PDP, a LCD, an OLED, a flexible display, a 3D display and the like, and input device which consists of a touch screen in addition to the output device may be also used.

The audio output unit 185 may receive and output audio processed signals in the control unit 170, for example, stereo signal, 3.1 channel signal or 5.1 channel signal by audio, which is implemented using speakers of the various types.

Meanwhile, the video display apparatus 100 may further include an imaging unit (not shown) for acquiring video of the user, and the video information acquired from the imaging unit (not shown) may be input to the control unit 170.

In this case, the control unit 170 may sense the user' gestures by separating or combing video imaged video by the imaging unit (not shown) or sensed signal by the sensing unit (not shown).

The power supply 190 may supply power to the video display apparatus 100 throughout, for example, the control unit 170, the display unit 180 and the audio output unit 185, which are implemented in the form of System On Chip (SOC).

To this end, the power supply 190 may include a convertor (not shown) converting AC power to DC power. Further, when the display unit 180 is implemented as LCD panel provided with a plurality of backlight lamps, the power supply 190 may further include a inverter (not shown) available for a PWM operation to drive a luminance adjusting or dimming.

The remote control device 200 transmits the user input to the user input interface unit 150. To this end, the remote control device 200 may use Bluetooth, Radio Frequency (RF) communication, Infrared (IR) communication, Ultra Wideband (UWB), ZigBee standards and the like.

In addition, the remote control device 200 may receive video, audio or data signals, and the like output from the user input interface unit 150, and display their signals from the remote control device 200 or output audio or vibration.

The above mentioned video display apparatus 100 may be at least one digital broadcast receiver of an digital broadcast of ATSC system (8-VSB system), an digital broadcast of DVB-T system (COFDM system), an digital broadcast of ISDB-T system (BST-OFDM system), and the like, which are fixed type

Meanwhile, since the video display apparatus 100 as shown FIG. 5 is an embodiment of the present invention, some of shown components may be integrated, added or omitted, depending on certain aspects of the actually implemented video display apparatus 100.

That is, the video display apparatus 100 may be configured to integrate two or more components into one component or subdivide one component into two or more components, as necessary. In addition, since the functions performed by each block are intended to describe an embodiment of the present invention, the scope of rights of the present invention is not limited to the specific operation or devices.

According to another embodiment of the present invention, the video display apparatus 100 may receive and reproduce videos through the network interface unit 133 or the external interface unit 135 without including the tuner 131 and demodulator 132 unlike shown in FIG. 5.

For example, the video display apparatus 100 may be separately implemented by the video processing device such as set-top boxes for receiving contents according to the broadcast signal or various network services and content reproducing device to reproduce contents input from the video processing apparatus.

In this case, a network service providing method, according to an embodiment of the present invention to be described blow, may be performed by any one of a video processing device such as the separated set-top box or a content reproducing device including the display unit 180 and the audio output unit 185, as well as the video display apparatus 100 as described with reference to FIG. 5.

FIG. 6 is showing embodiments of a platform structure of the video display apparatus, and the platform of the video display apparatus 100 may include OS-based software in order to perform various operations as described above.

Referring to FIG. 6A, the platform of the video display apparatus 100 may be separately designed by Legacy system platform 400 and Smart system platform 405, as detachable platforms.

The OS Kernel 410 may be used in the Legacy system platform 400 and the Smart system platform 405 as a common, and the Legacy system platform 400 may include a driver 420, a middleware 430 and an application layer 450 on the OS Kernel 410.

Meanwhile, the Smart system platform 405 may include a library 435, a framework 440, and an application layer 455 on the OS Kernel 410

The OS Kernel 410, which is core of an operating system, may provide a hardware driver driving when driving the video display apparatus 100, hardware and processor' securities in the video display apparatus, efficient managements of the system resources, a memory management, an interface providing for hardware according to a hardware abstraction, a multi-process, a schedule management and a power management according to the multi-process, or the like.

For example, the hardware driver in the OS Kernel 410 may include at least one of a display driver, a WIFI driver, a Bluetooth driver, a USB driver, an audio driver, a power management, a binder driver, a memory driver, and the like.

In addition, the hardware driver in the OS Kernel 410, which is a driver for hardware device in the OS Kernel 410, may include a character device driver, a block device driver and a network device driver.

Meanwhile, the block device driver may include a buffer which holds by unit size as the data is transferred in a particular block unit, the character device driver may not include the buffer as described above as the data is transferred in a basic unit, that is, a character unit.

The OS Kernel 410 may be implemented as various operating system (OS)-based Kernel such as Unix-based (Linux), Window-based, and the like, and the opened OS Kernel may be available as universal in another electronic devices, and the like.

The driver 420 may be located between the OS Kernel 410 and the middleware 430 and may drive devices for operation of the application layer 450 in addition to the middleware 430.

For example, the driver 420 may include drivers of a microcomputer (micom) in the video display apparatus 100, a display module, a graphic processing unit (GPU), a frame rate converter (FRC), a general purpose input/output pin, (GPIO), a HDMI, system decoder or demultiplexer (SDEC), a video decoder (VDEC), an audio decoder (ADEC), a personal video recorder (PVR) or inter-integrated circuit (I2C), and the like. As mentioned above, the divers may be operated in conjunction with the hardware driver in the OS Kernel 410.

In addition, the driver 420 may further include a driver of the remote control device 200, for example, the driver of a space remote controller, the space remote controller may be variously included in the OS Kernel 410 or the middleware 430 in addition to the driver 420.

The middleware 430 may be located between the OS Kernel 410 and the application layer 450, and may serve to receive and transmit data between another hardware and software. Accordingly, a standardized interface may be provided, and supports of various environments and systems may be operated in conjunction with different tasks.

For example, the middleware 430 in the Legacy system platform 400 may be Multimedia and Hypermedia information coding Experts Group (MHEG) and Advance Common Application Platform (ACAP) which are middlewares related to data broadcasting, middleware of PSIP or SI which are middlewares related to broadcast information or DLNA middleware which is middleware related to peripherals communications, and the like.

Meanwhile, the application layer 450 on the middleware 430, which is the application layer 450 within Legacy system platform 400, may include a User Interface Application related to various menus within the video display apparatus 100.

The application layer 450 on the middleware 430 may be edited by the user's selection and updated through the network. By using the application layer 450, it is possible to enter a desired menu among various user interfaces in accordance with the input of the remote control device in viewing the broadcast video.

In addition, the application layer 450 within the Legacy system platform 400 may further include at least one of a TV guide application, a Bluetooth application, a reservation application, a Digital Video Recorder (DVR) application, a Hotkey application.

Meanwhile, the library 435 within the Smart system platform 405 may be located between the OS Kernel 410 and the framework 440, and the basis of the framework 440 may be formed. For example, the library 435 may include a Secure Socket Layer (SSL) which is a security-related library, a Web Kit which is a web engine-related library, c library (libc) and a Media Framework which is media- related library such as a video format and an audio format, and be created based on C or C++ to be exposed to developers through the framework 440.

The library 435 may include a runtime 437 having a core java library and a Virtual Machine (VM), the runtime 437 may form the basis of the framework 440 in addition to the library 435.

The Virtual Machine (VM) may be a virtual machine so as to perform a plurality of instances, that is, multi-tasking. Meanwhile, each virtual machine VM may be assigned and performed according to each application within the application layer 455. In this case, in order to adjust schedules between a plurality instances or to interconnect between the pluralities of instances, a binder driver (not shown) within the OS Kernel 410 may be operated.

Meanwhile, a Java-based application and C-based libraries may be connected each other by the binder driver and the runtime 437, and the library 435 and the runtime 437 may correspond to the middleware of the Legacy system.

Meanwhile, the framework 440 within the Smart system platform 405 includes a program based on the application within the application layer 455. The framework 440 is compatible with any application and it is possible to reuse, move, or exchange the component.

The framework 440 may include supporting program and programs to be associated with other software components. For example, the framework 440 may include a resource manger, activity manager related to an activity of application, a notification manager, a content provider summarizing information shared between applications, and the like.

The application layer 455 on the framework 440 includes a variety of programs which are displayed by being driven in the video display apparatus 100. For example, the application layer 450 may include Core-Application having at least one of e-mail, Short message service (SMS), a calendar, a map, a browser and the like.

Meanwhile, the framework 440 or the application layer 450 as described above may be created by based on JAVA.

In addition, the application layer 455 may be split into an application 465, which is stored in the video display apparatus 100 and may be un-deleted by the user, and an application 475, which is downloaded through the external device or network and stored in the video display apparatus 100 and may be freely mounted or deleted.

An internet phone service, Video On Demand (VOD) service, Web album service, Social Networking Service SNS, Location-based Service (LBS), a Map Service, a Web search service, an application search service through the network connection may be performed by the application in the application layer 455. In addition, various functions such as games, schedule managements, and the like may be performed.

Meanwhile, as shown in FIG. 6B, the platform of the video display apparatus 100, as an integrated platform, may include an OS Kernel 510, a driver 520, a middleware 530, a framework 540 and an application layer 550.

In the platform in shown FIG. 6B, when compared to that shown in FIG. 6A, the library 435 is omitted, there are differences that the application layer 550 is integrated layer, and the driver 520 and the framework 540 may be the same.

The platform in shown FIGS. 6A and 6B may be used for general purposes in various electronic devices as well as the video display apparatus 100, and may be stored and loaded in separate processor (not shown) as well as the storage unit 140 or control unit 170 shown in FIG. 5.

In addition, the platform may be stored or loaded in the SI & metadata DB 711, UI manager 714, and service manager 713 shown in FIG. 4 and may further include a separate application processor (not shown) for performing the application.

Meanwhile, a pointer movement method according to an embodiment of the present invention, described in detail hereinafter, may be realized by a program executed in a computer

In addition, the pointer movement method according to the embodiment of the present invention is performed by storing the program, which is made in the form of applications, into the storage unit 140 in the video display apparatus 100, and executing the application stored in the storage unit 140 by the control unit 170

In this case, the application for executing the pointer movement method according to the embodiment of the present invention my be stored in the storage unit 140 by the manufacturer before sales or downloaded by the user after sales of the video display apparatus.

FIG. 7 is a diagram schematically showing a configuration of a key pad of a remote control device according to the prevent invention. The remote control device according to the present invention, for example, a remote controller transmits a user input signal input to local keys such as a power key. A channel key, a volume key, and the like to a user input interface unit 150. To this end, the remote controller includes direction keys 201, an execution key 202, mapping keys 203, volume keys 204, channel keys 205, a split request / release key 206 and an enlargement request key 207 as control keys for user input signals.

The direction keys 201 are used in a case that the user selects a different split area than a split area selected by default in a plurality of split areas described later, and includes a right key(→), a left key(←), a upward key (↑) and a downward key (↓). When the direction keys 201 are input by the user, a pointer displayed in the screen is moved toward a split area corresponding to a direction input by the user and displayed.

The execution key 202 is a key for requesting a process for a specific function performance area (for example, a hyper link or an input box) included in a selected split area of a plurality of split areas described later.

The mapping keys 203 are keys for entering characters and numbers, and since number keys each corresponding to a plurality of split areas described later is mapped, when a specific number key is input, a pointer displayed on the screen is moved toward the split area corresponding to the input key and displayed.

The volume keys 204 are used for adjusting the volume output when viewing TV or using contents, and include a volume increase key (Δ) and a volume decrease key (∇). In addition, the volume keys 204 are used for enlarging or reducing the plurality of split areas according to the present invention. Meanwhile, keys for enlarging or reducing the plurality of split areas according to the present invention by the user setting may be set to channel keys 205.

The channel keys 205 are used for channel up and down when viewing TV.

The split request / release key 206 is a key splitting a browser screen into a plurality of split areas by partitioning the browser screen according to the present invention by the user. In a state where the browser screen is displayed, when the split request / release key 206 is input, the control unit 170 controls to display a screen split line on the browser screen for splitting the browser screen into the plurality of split areas. In addition, in a state where the browser screen is split into the plurality of split area through the screen split line, when the split request / release key 206 is again input, the control unit 170 controls to remove the screen split line displayed on the browser screen and to display the removed state. A detailed explanation regarding this will be described later.

The enlargement request key 207 is a key for enlarging and displaying a specific split area by a full screen. That is, in the state where any one split area of the plurality of split areas is selected, when the enlargement request key 207 is input, the control unit 170 controls to change the selected specific area into the full screen and display the changed state.

Meanwhile, in the embodiment, the direction key 201, the execution key 202, the mapping key 203, the volume key 204, the channel key 205, the split request / release key 206 and the enlargement request key 207 are illustrated as an example that all of those are formed as hardware keys. However, the present invention is not limited thereto, and various examples are possible. For example, the corresponding keys may be realized by software.

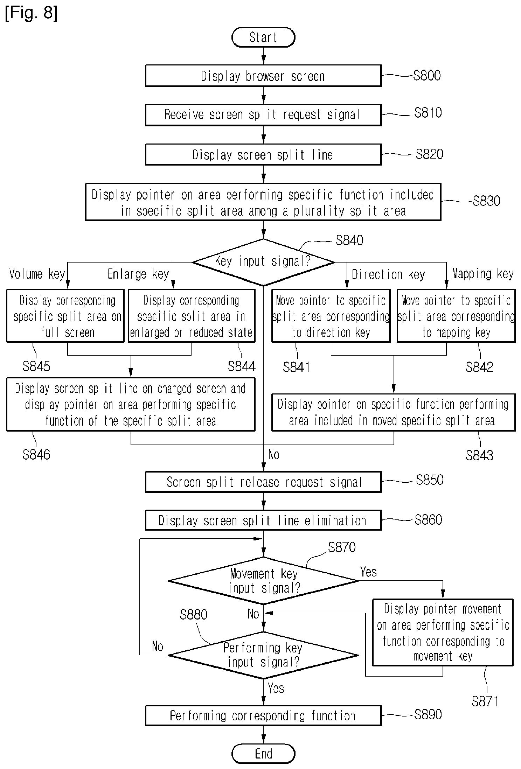

Hereinafter, the pointer movement method according to the present invention will be described with reference to FIGS. 8 to 19. FIG. 8 is a flowchart showing a first embodiment of a pointer movement method according to present invention. FIGS. 9 to 19 are block diagrams schematically showing a browser screen of a video display apparatus according to the present invention.

First, referring to FIG. 8, the control unit 170 enables an internet browser screen to be displayed on the display unit 180 when a connection request to internet is received. Accordingly, internet web page or WAP page (hereinafter, referred to as web page) is displayed on the screen of display unit 180.

Nest, when the screen split request signal is received through the user input interface unit 150 (S810), the control unit 170 enables a screen split line (L) splitting the browser screen into a plurality of split areas to be displayed on the screen of the display unit 180 (S820). As shown in FIG. 10, as the screen split line (L) splitting the browser screen of the display unit 180 into a plurality of split areas is displayed, the full screen may be split into nine areas by the screen split lines (L). Herein, marks of areas A to I are for explaining the embodiment, and the marks are not actually displayed on the browser screen of the display unit 180.

In addition, a pointer P is displayed on a specific function performance area included in the specific split area of the plurality of split areas split by the screen split line L. Here, the function performance area may be a hyperlink menu or a predetermined input box, for example, a search box for the search or an input box for the log-in/password.

Referring to FIG. 10, the specific split area in which the pointer P is first displayed may be displayed on a split area located on the center of the plurality of split areas, for example, a split area E. In addition, the split area E may includes a plurality of function performance area, and the specific function performance area in which the pointer P first displayed may be a function performance area located on center of plurality of function performance areas included in the split area E.

Thus, after the screen split request signal is input, the first displayed pointer P may be displayed on the specific split area located on the center of the plurality of split areas and the specific function performance area located on the center of the plurality of function performance areas included in the specific split area, thereby minimizing the inconvenience in which the user presses the direction key for long time for performing the specific function on the browser screen.

Meanwhile, the specific split area in which the pointer P is first displayed may be highlight-displayed to be distinguished from the other split area (HI), and the specific function performance area in which the pointer P is first displayed may be also highlight-displayed to be distinguished from other function performance area (H2).

The highlight-display (HI, H2) displayed in the specific split area and the specific function performance area is displayed to be distinguished from other areas through a specific box with respect to the corresponding area. However, the present invention is not limited thereto; colors or transparencies of the specific split area and the specific function performance area may be displayed to be distinguished from other areas.

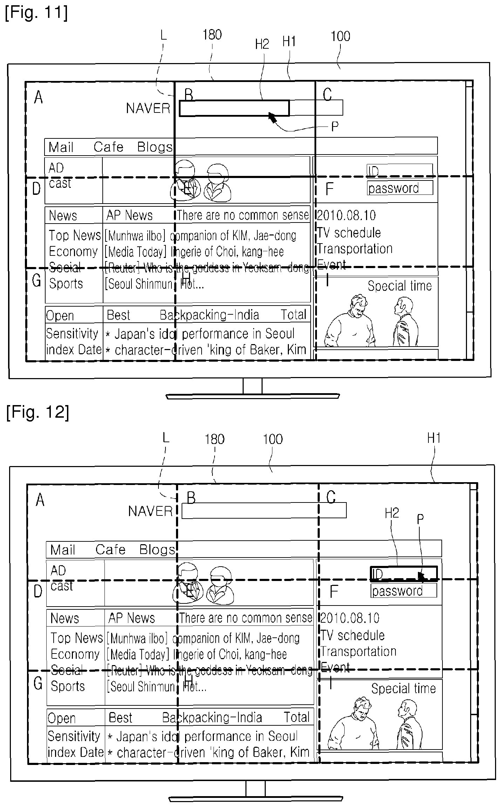

Meanwhile, referring to FIG. 11, the specific split area in which the pointer P is first displayed may be displayed on a split area including an input box for the search of the predetermined input boxes in the plurality of split areas, for example, a split area B. In addition, the pointer P may be first displayed on the input box, which is a specific function performance area included in the split area B, for the search.

Thus, after the screen split request signal is input, the first displayed pointer P may be displayed on the specific split area including the input box for the search in the plurality of split areas and the input box for the search, such that the predetermined characters or numbers, and the like may be input on the browser screen for the direct search, without moving the pointer by separate direction keys.

Meanwhile, the specific split area in which the pointer P is first displayed may be highlight-displayed to be distinguished from the other split area (HI), and the specific function performance area in which the pointer P is first displayed may be also highlight-displayed to be distinguished from the other function performance area (H2).

Meanwhile, referring to FIG. 12, the specific split area in which the pointer P is first displayed may be displayed on a split area including an input box for the log-in of the predetermined input boxes in the plurality of split areas, for example, a split area C. In addition, the pointer P may be first displayed on the input box, which is a specific function performance area included in the split area C, for the log-in input.

Thus, after the screen split request signal is input, the first displayed pointer P may be displayed on the specific split area including the input box for the log-in input in the plurality of split areas and the input box for the log-in input, such that the log-in input may be directly performed on the browser screen, without moving the pointer by separate direction keys.

Meanwhile, through FIGS. 10 to 12, after the screen split request signal is received, the specific split area in which the pointer P is first displayed was explained in various embodiments. However, in the various embodiments, the area in which the pointer is first displayed may be changed by the user. In addition, even when two or more specific function performance areas, for example, the input box for the search and the input box for the log-in, are present at the area in which the pointer is first displayed, all together, priorities is provided according to the user' setting, such that the pointer P is first displayed according to the priorities.

Nest, the control unit 170 determines whether a predetermined key input signal is received from the user input interface unit 150 (S840). In this embodiment, the predetermined key input signal received from the user input interface unit 150 may be an area change request signal or a screen enlargement/reduction request signal. In addition, the area change request signal may be signals received from inputs of the direction keys 201 or mapping keys 203 shown in FIG. 7 or, signals received from inputs of volume keys 204 and the enlargement request key 207 shown in FIG. 7.

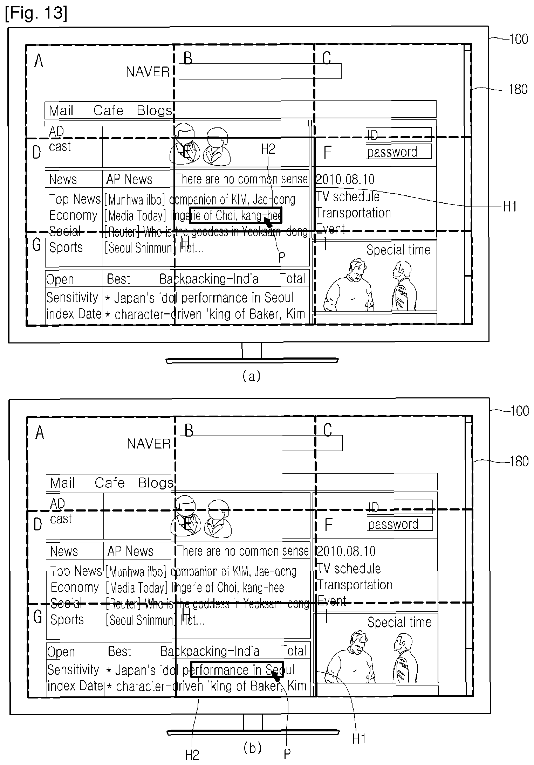

As result of the determination in S840, when the area change request signal is the signal received from the input of the direction keys 201, a current pointer P is moved and displayed on the specific split area corresponding to the input of the direction keys 201 S841. Referring to FIG. 13A, it is find that the location of the current pointer P is located on the split area E. In the state of FIG. 13A, when the user enter the downward key (↓), as shown in FIG. 13B, the pointer P displayed on the split area E, the pointer P displayed in the split area E is moved and displayed on the split area H.

Herein, the pointer P is displayed on a function performance area set by the user in a hyperlink menu located on the center of the plurality of function performance areas included in the split area H or the input boxes for the search/log-in input (S843). According to the movement of the split area, since the specific function performance area in which the pointer P is displayed is similarly applied to all movements of the split areas, the detailed explanations are omitted.

In addition, the split area H moved by the input of the direction keys 201 and the specific function performance area in which the pointer P is displayed may be highlight-displayed (HI, H2).

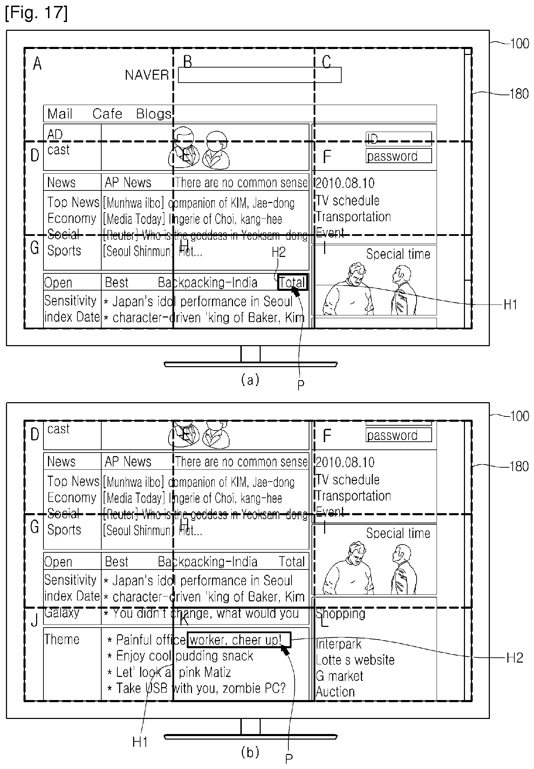

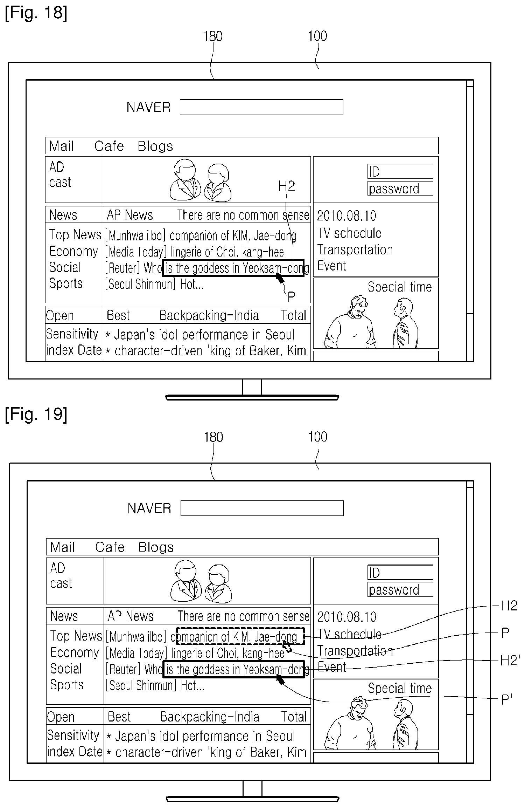

Meanwhile, the process of the pointer movement is repeatedly performed each time the direction keys 201 are input by the user. Referring to FIG. 17, as shown in FIG. 17A, when the user enter the downward key (↓) under a state where the pointer P is located on the split area H, the web page displayed on the browser screen is scrolled and moved, such that the pointer P is moved and located on the split area K, as shown in FIG. 17B. Thus, the area of a web page not displayed on the screen as shown in FIG. 17B may be displayed as shown in FIG. 18A.

Meanwhile, as result of the determination in S840, when the area change request signal is the signal received from the input of the mapping keys 203, a current pointer P is moved and displayed on the specific split area corresponding to the input of the mapping keys 203 (S842). Herein, when the plurality of split areas is split into nine areas, each of numbers of the mapping keys 203 shown in FIG. 7 may be correspondingly mapped each other.

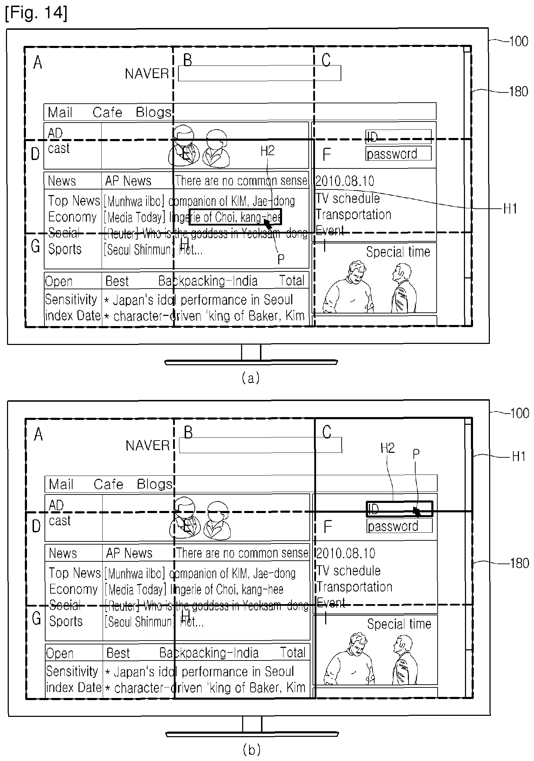

For example, as shown in FIG. 14A, under a state where the location of the current pointer p is located on the split area E, when the user enters the number '3' of the mapping keys 203, as shown in FIG. 14B, the location of the pointer P may be moved to a mapped split area C by corresponding to the number '3' of the mapping keys 203. Likewise, not shown in the drawing, when the user enters the number '1' of the mapping keys 203, the location of the pointer P may be moved to a mapped split area A by corresponding to the number '1' of the mapping keys 203.

Meanwhile, as result of the determination in S840, when a signal received from the user input interface unit 150 is the screen enlargement request signal according to the input of the enlargement request key 207, the specific split area in which the pointer P is located is displayed on the full screen when inputting the enlargement request key 207 (S844). In addition, the full screen is split and displayed on the plurality of split areas (S846).

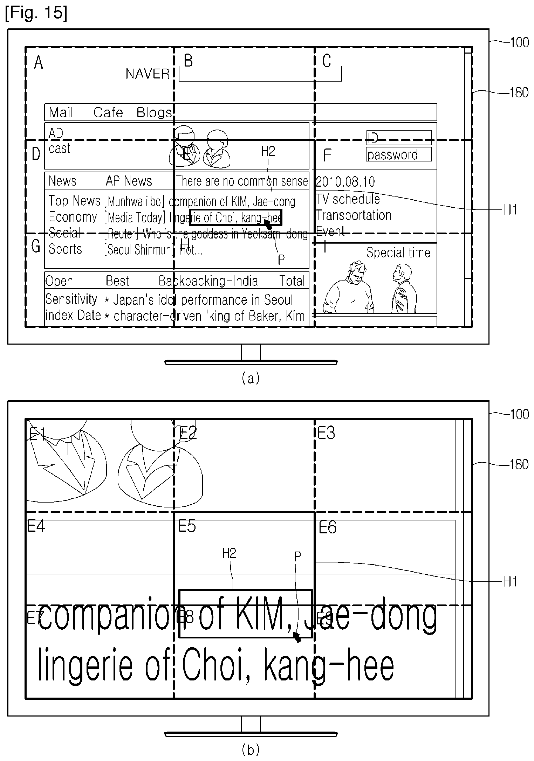

For example, as shown in FIG. 15A, under a state where the location of the current pointer P is located on the split area E, when the user enters the enlargement request key 207, the split area E at the time of the input of the enlargement request key 207 is enlarged and displayed on the full screen and the enlarged split area E on the full screen is re-split and displayed on a plurality of split areas E1 to E9, as shown in FIG. 15B.

Meanwhile, as result of the determination in S840, when a signal received from the user input interface unit 150 is the screen enlargement/reduction request signal according to the input of the volume keys 204, the web page displayed on the browser screen is enlarged or reduced and displayed on the center of the specific split area in which the pointer P is located when inputting the volume keys 204 (S845). In addition, the screen of the enlarged or reduced web page is split and displayed on the plurality of split areas (S846).

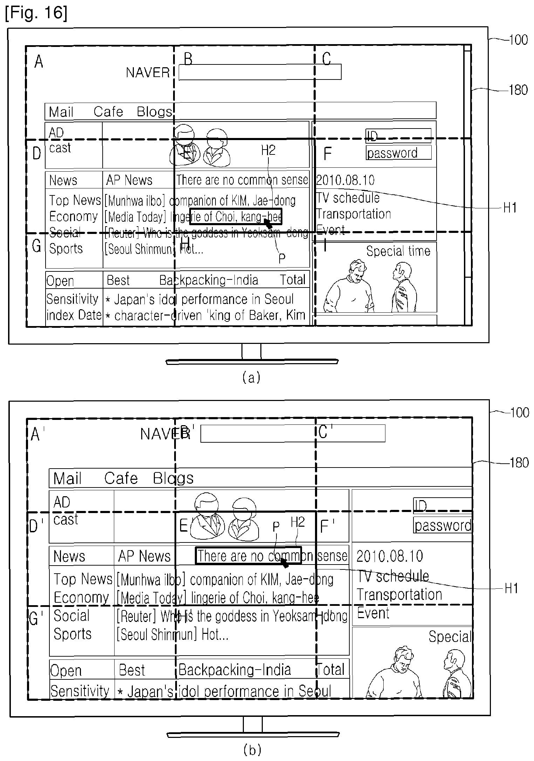

For example, as shown in FIG. 16A, under a state where the location of the current pointer P is located on the split area E, when the user enters the volume increase key (Δ), the entire web page is enlarged and displayed on the center of the split area E at the time of the input of the volume keys 204, as shown in FIG. 16B. Although not shown in the drawing, likewise, when the user enter the volume reduction key (∇) of the volume keys 204 under the state of FIG. 15A, the entire web page is reduced and displayed on the center of the split area E at the time of the input of the volume keys 204. The process of the screen enlargement/reduction may be repeatedly performed according to the user's requirements. In addition, when the user enter the volume increase key (Δ) in succession, the corresponding to the web page is consecutively enlarged and displayed on the display unit 180 in entire screen, such that the split area E is enlarged and displayed on the full screen, as shown in FIG. 15B.

As described above, after receiving the screen split request signal (S810), the processes S820 to S846 may be repeatedly performed, thus the user may easily move the pointer on the browser screen, instinctively

Meanwhile, after the pointer P is moved to a desired location by the user, when the screen split release signal is received through the user input interface unit 150 (S850), the control unit 170 enables the browser screen to be displayed under the state where the screen split line (L) displayed on the screen of the display unit 180 is removed (S860). Thus, as shown in FIG. 18, the state where the specific function performance area indicated by the current displayed pointer P is highlighted (H2) is displayed on the browser screen.

Then, the control unit 170 decides the signal input from the user input interface unit 150 (S870), and when the signal input from the user input interface unit 150 is the move request signal by the input of the direction keys 201, as shown in FIG. 19, the location of the pointer P displayed on the current specific function performance area is moved and displayed on the specific function performance area corresponding to the input of the direction keys 201 (S871).

Meanwhile, under a state where the pointer P is located on the specific function performance area capable of performing the desired function by the user, when receiving the input of the execution key 202, the control unit performs the function corresponding to the specific function performance area (S890). Herein, performing the function corresponding to the specific function performance area means process of displaying the web page of the corresponding internet site and process of inputting specific characters to the input box by connecting the selected hyperlink to Internet site.

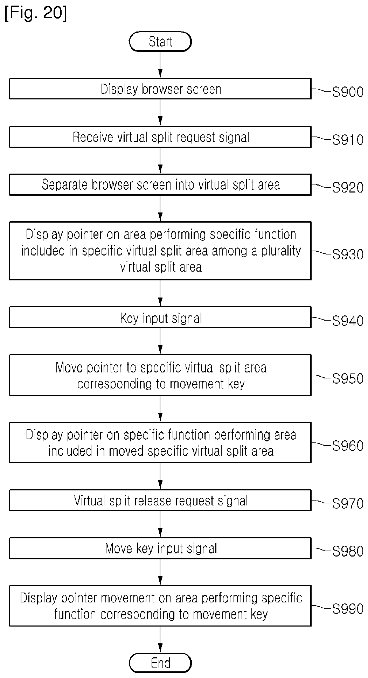

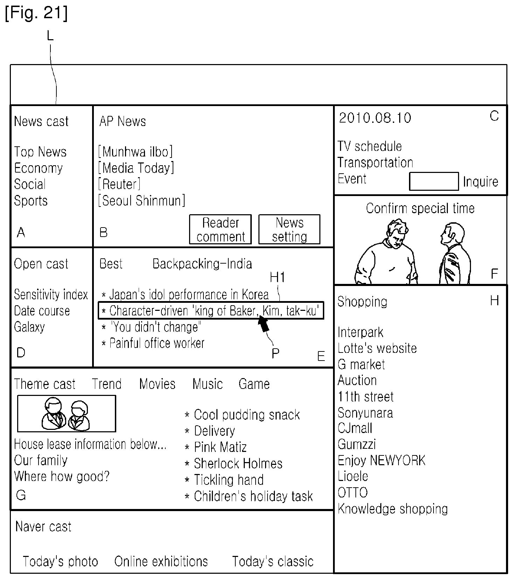

Hereinafter, the pointer movement method according to the present invention will be described with reference to FIGS. 20 to 27. FIG. 20 is a flowchart showing a first embodiment of a pointer movement method according to present invention. FIGS. 21 to 27 are block diagrams schematically showing a browser screen of a video display apparatus according to the present invention.

First, referring to FIG. 21, the control unit 170 enables an internet browser screen to be displayed on the display unit 180 when a connection request to Internet is received (S900). Accordingly, internet web page or WAP page (hereinafter, referred to as web page) is displayed on the screen of display unit 180.

Next, when the virtual screen split request signal is received from the user input interface unit 150 (S910), the control unit 170 controls the display unit 180 to split the browser screen on the display unit 180 into a plurality of virtual split areas (S920). As shown in FIG. 21, in splitting the browser screen of the display unit 180 into a plurality of split areas, in the virtual screen split, the virtual split area is set for each frame specified in the corresponding web page, such that a plurality of virtual split areas may be set. As shown in FIG. 21, the frames specified in the corresponding web page may be separated into eight areas. That is, when the frames specified in the corresponding web page are eight, eight virtual split areas may be set. In contrast, when the frames specified in the corresponding web page are ten, ten virtual split areas may be set.

Herein, marks of areas A to H are for explaining a plurality of virtual split areas separated for each frames in the corresponding web page, and the marks are not actually displayed on the browser screen of the display unit 180. In addition, in contrast to that shown in FIG. 10, virtual split lines L separating the plurality of virtual split areas are not actually displayed on the browser screen displayed on the display unit 180.

Meanwhile, a pointer P is displayed on the specific function performance area include in the specific virtual split area of the plurality of virtual split areas separated for each frames in the corresponding web page. Herein, the function performance area may be a hyperlink menu.

Referring to FIG. 21, the specific virtual split area in which the pointer P is first displayed may be displayed on a virtual split area located on the center of the plurality of virtual split areas, for example, a virtual split area E. In addition, the virtual split area E may includes a plurality of function performance area, and the specific function performance area in which the pointer P first displayed may be a function performance area located on center of plurality of function performance areas included in the virtual split area E.

Thus, after the virtual split request signal is input, the first displayed pointer P may be displayed on the specific virtual split area located on the center of the plurality of virtual split areas and the specific function performance area located on the center of the plurality of function performance areas included in the specific virtual split area, thereby minimizing the inconvenience in which the user presses the direction key for long time for performing the specific function on the browser screen.

Meanwhile the specific function performance area in which the pointer P is first displayed may be highlight-displayed to be distinguished from the other function performance area (H1).

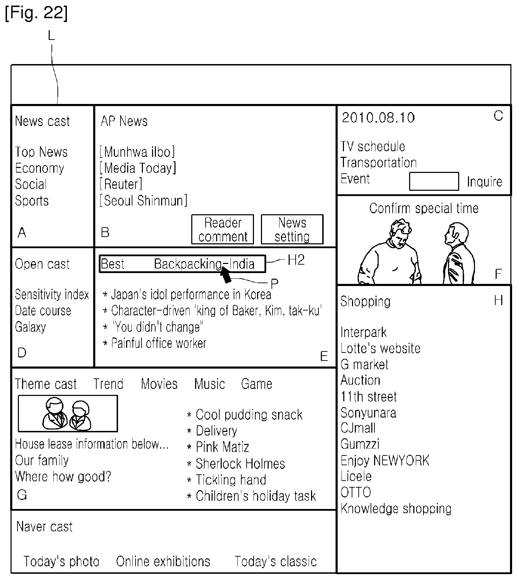

Referring to FIG. 22, the specific virtual split area in which the pointer P is first displayed may be displayed on a virtual split area located on the center of the plurality of virtual split areas, for example, a virtual split area E. In addition, the virtual split area E may includes a plurality of function performance area, and in contrast to that shown in FIG. 21, the specific function performance area in which the pointer P first displayed may be a first function performance area, which is the function performance area located on the most top of the left, of the plurality of function performance areas included in the virtual split area E.

Meanwhile the specific function performance area in which the pointer P is first displayed may be highlight-displayed to be distinguished from the other function performance area (H2).

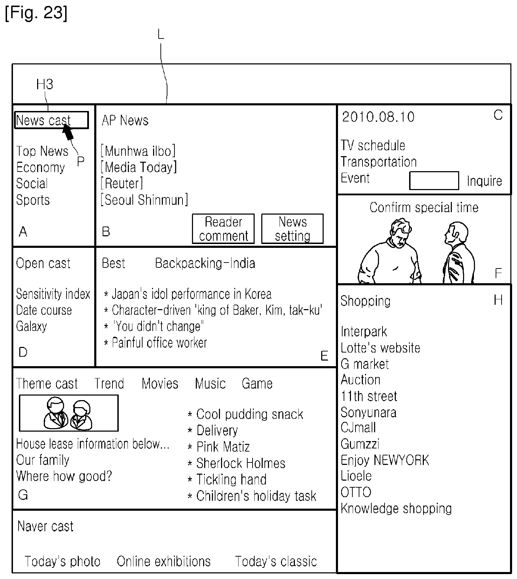

Referring to FIG. 23, the specific virtual split area in which the pointer P is first displayed may be displayed on a virtual split area firstly located of the plurality of virtual split area, which is the virtual split area located on the top of the left of the plurality of virtual split areas, for example, on a virtual split area A. In addition, the virtual split area A may include a plurality of function performance area, and the specific function performance area in which the pointer P is first displayed may be a first function performance area, which is a function performance area located on the top of the left, of the plurality of function performance areas included in the virtual split area A.

Meanwhile the specific function performance area in which the pointer P is first displayed may be highlight-displayed to be distinguished from the other function performance area (H3).

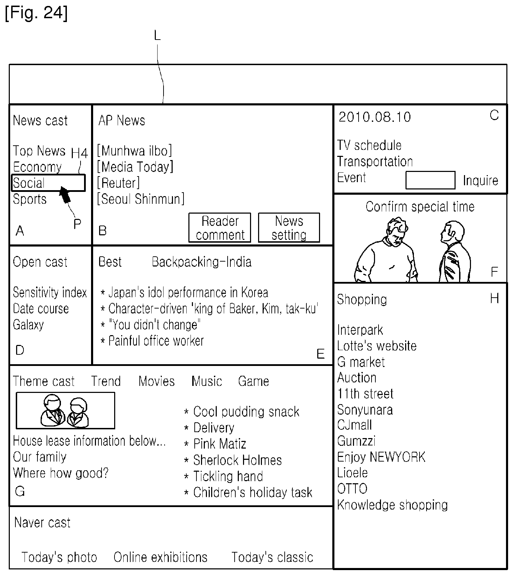

Referring to FIG. 24, the specific virtual split area in which the pointer P is first displayed may be displayed on a virtual split area firstly located of the plurality of virtual split area, which is the virtual split area located on the top of the left of the plurality of virtual split areas, for example, on a virtual split area A. In addition, the virtual split area A may includes a plurality of function performance area, and in contrast to that shown in FIG. 23, the specific function performance area in which the pointer P is first displayed may be a function performance area located on the center of the plurality of function performance areas included in the virtual split area A.

Meanwhile the specific function performance area in which the pointer P is first displayed may be highlight-displayed to be distinguished from the other function performance area (H4).

Meanwhile, through FIGS. 21 to 24, after receiving the virtual split request signal, the specific split area and the specific function performance area in which the pointer P is first displayed were explained in various embodiments. However, in the various embodiments, the area in which the pointer is first displayed may be changed by the user' setting.

Nest, the control unit 170 determines whether a movement key input signal is received from the user input interface unit 150 (S940). The movement key input signal may be a signal received by the input of the direction keys 201. Thus, the pointer is moved into the specific virtual split area located in the direction corresponding to the movement key input signal in the specific virtual split area in which the current pointer is located (S950), and the pointer is moved and displayed on the specific function performance area included in a the specific virtual split area (S960).

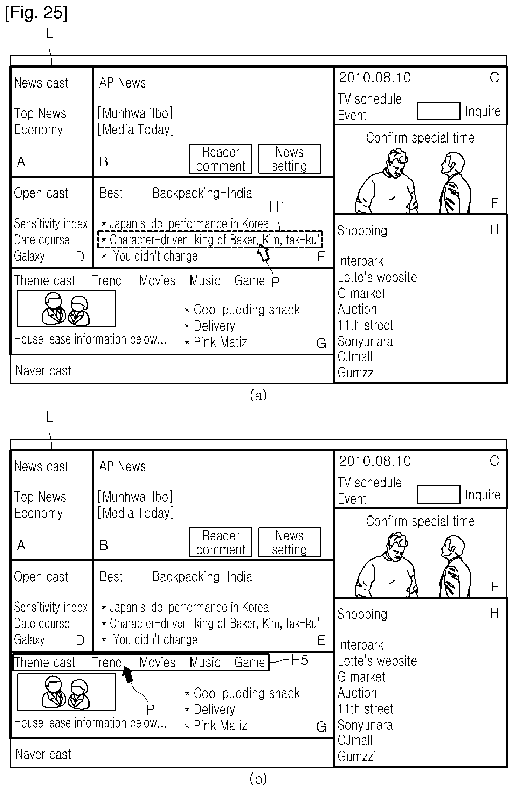

Referring to FIG. 25A, it is find that the location of the current pointer P is located on the virtual split area E. In the state of FIG. 25A, when the user enter the downward key (↓), the pointer P displayed on the virtual split area E is moved and displayed on the virtual split area G located just below the virtual split area E, as shown in FIG 25B.

In addition, the pointer P may be moved and displayed on a first function performance area H5 of the plurality of function performance areas included in the virtual split area G, that is, a function performance area located on the top of the left.

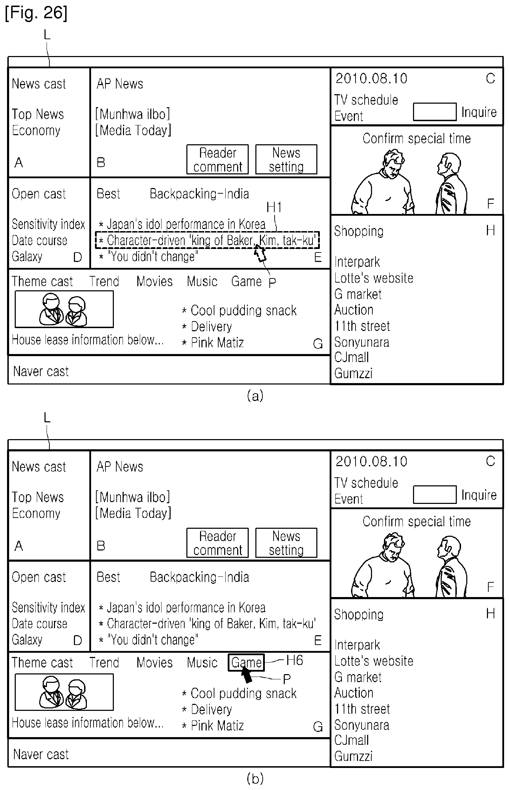

Meanwhile, referring to FIG. 26A, it is find that the location of the current pointer P is located on the virtual split area E. In the state of FIG. 26A, when the user enter the downward key (↓), the pointer P displayed on the virtual split area E is moved and displayed on the virtual split area G just located below the virtual split area E, as shown in FIG 26B.

In addition, in contrast to FIG. 26B, the pointer P may be moved and displayed on a function performance area H6 closest located to the virtual split area E of the plurality of function performance area included in the virtual split area G.

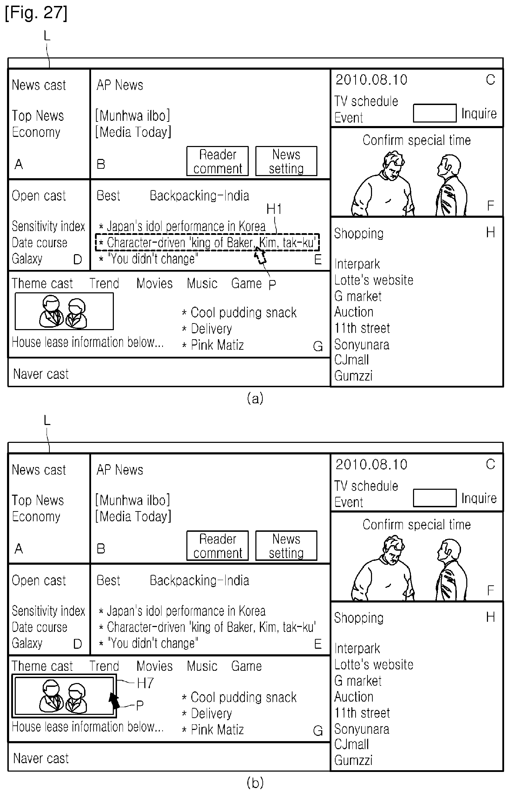

Meanwhile, referring to FIG. 27A, it is find that the location of the current pointer P is located on the virtual split area E. In the state of FIG. 27A, when the user enter the downward key (↓), the pointer P displayed on the virtual split area E is moved and displayed on the virtual split area G just located below the virtual split area E, as shown in FIG 27B.

In addition, in contrast to FIG. 25B, the pointer P may be moved and displayed on a function performance area H7 located on the center of the plurality of function performance area included in the virtual split area G.

Meanwhile, through FIGS. 25 to 27, after receiving the movement key input signal, the specific split area and the specific function performance area in which the pointer P is moved and displayed were explained in various embodiments. However, in the various embodiments, the area in which the pointer is moved may be changed by the user' setting.

As described above, after receiving the virtual split request signal (S910), the processes S940 to S960 may be repeatedly performed, thus the user may easily move the pointer between the virtual split areas on the browser screen, instinctively

Meanwhile, after the pointer is moved to a desired location by the user and the virtual split release signal is received (S970) through the user input interface unit 150 (S980), when the movement key input signal is received (S980), in contrast to the movement of the pointer P between the virtual split areas as in the processes S940 to S960, the movement of the pointer P is changed to the movement between the specific function performance areas in the direction corresponding to the movement key input signal.

The control unit 170 enables the browser screen to be displayed under the state where the screen split line (L) displayed on the screen of the display unit 180 is removed (S860). Thus, as shown in FIG. 18, the state where the specific function performance area indicated by the current displayed pointer P is highlighted (H2) may be displayed on the browser screen.

Meanwhile, the method of moving the pointer when browsing on the web page is described as an example in the embodiment. However, the present invention is not limited to thereof, and if the method is applications performing the process for moving a pointer or curser into a specific points such as map-related programs (e.g., a navigation, etc) or text editor program, the invention may be applied to various applications.

In addition, in the embodiment, for example, the browser screen is split into 9 split blocks of 3 x3 blocks is described, but not limited to thereof, and various applications may be applied by splitting the browser screen into 12 split blocks of 4 x 3 blocks or 15 split blocks of 5 x3 blocks, and the like.

The method for moving a pointer in the video display device according to the present invention can also be embodied as programs to be executable in a computer and be stored in a computer readable recording media. Examples of the computer readable recording media include read-only memory (ROM), random-access memory (RAM), CD-ROMs, magnetic tapes, floppy disks, optical data storage devices, and so on. Furthermore, it can be implemented as carrier waves (such as data transmission through the Internet).

The computer-readable recording media are distributed on computer systems connected through the network, and thus the computer-readable recording media may be stored and executed as the computer-readable code by a distribution scheme. Further, functional programs, codes, and code segments for implementing a method of receiving broadcast can be easily inferred by programmers in the related art.

Although preferred embodiments of the present invention have been illustrated and described, the present invention is not limited to the above-mentioned embodiments and various modified embodiments can be available by those skilled in the art.

## Claims

1. A pointer movement method in a video display apparatus, comprising:
receiving a screen split request signal:
displaying screen split lines by which a browser screen is split into a plurality of split areas by partitioning the browser screen in response to the screen split request signal; and
displaying a pointer on a first function performance area included in a first split area of the plurality of split areas;
receiving an area change request signal; and
**characterized by**:
in response to the received area change request signal, displaying the pointer on a second function performance area included in a second split area of the plurality of split areas, wherein the second split area has a plurality of function performance areas mutually arranged so that one of these function performance areas is located in the center of the plurality of function performance areas, and wherein the second function performance area is the center one.

2. The pointer movement method according to Claim 1,
wherein the first and second function performance areas are any one of a hyperlink menu and an input box, and
wherein the input box is anyone of an input box for the search or an input box for the log in.

3. The pointer movement method according to Claim 2 wherein:
the first split area on which the pointer is displayed is any one of a split area located on a center area of the browser screen comprising the plurality of split areas and a split area including the input box; and
when the first split area on which the pointer is displayed is the split area including the input box of the plurality of split areas, the first function performance area on which the pointer is displayed is any one of the input box for the search or the input box for the log-in in the plurality of function performance areas included in the first split area; and
when the first split area on which the pointer is displayed is the split area located on the center area of the browser screen comprising the plurality of split areas, the first function performance area on which the pointer is displayed is a function performance area located on a center area of the browser screen comprising the plurality of function performance areas included in the first split area.

4. The pointer movement method according to Claim 1, wherein the function performance areas on which the pointer is displayed and the split areas in which the pointer is displayed including the function performance areas are highlight-displayed.

5. The pointer movement method according to Claim 1, wherein:
the area change request signal includes one of a direction key input signal or a mapping key input signal that is a specific number key of a plurality of number keys each corresponding to one of the plurality of split areas;
when the area change request signal is the direction key input signal, the pointer is displayed on the split area corresponding to a direction of the direction key input signal; and
wherein when the area change request signal is the mapping key input signal, the pointer is displayed on the split area corresponding to the mapping key input signal.

6. The pointer movement method according to Claim 1, further comprising:
receiving a screen enlargement request signal;
displaying the split area on which the pointer is displayed on the full screen by enlarging the split area according to the screen enlargement request signal; and
displaying the pointer on the function performance area included in the split area of the plurality of split areas by splitting the full screen into the plurality of split areas.

7. The pointer movement method according to Claim 1, further comprising:
receiving a screen split release request signal; and
removing the screen split line according to the screen split release request signal.

8. The pointer movement method according to Claim 7, further comprising:
receiving a move request signal; and
displaying the pointer moved into the function performance area corresponding to the move request signal.

9. A video display apparatus, comprising:
display unit (180) configured to display a browser screen,
a user input interface unit (150) configured to receive a screen split request signal and an area change request signal, and
a control unit (170) configured to control to:
display screen split lines into which a plurality of areas are split on the display unit by partitioning the browser screen according to the screen split request signal received in the user input interface unit (150), and
display a pointer on a first function performance area included in a first split area of a plurality of split areas; and
**characterized in that** the controller (170) is further configured to, in response to the area change request signal received by the user input interface unit (150), display the pointer on a second function performance area included in a second split area of the plurality of split areas, wherein the second split area has a plurality of function performance areas mutually arranged so that one of these function performance areas is located in the center of the plurality of function performance areas, and wherein the second function performance area is the center one.

10. The video display apparatus according to Claim 9, wherein the first split area on which the pointer is displayed is one of a split area located on a center area of the browser screen comprising the plurality of split areas and a split area including an input box.

11. The video display apparatus according to Claim 10, wherein:
when the first split area on which the pointer is displayed is the split area located on the center area of the browser screen comprising the plurality of split areas, the first function performance area on which the pointer is displayed is a function performance area located on a center area of the browser screen comprising the plurality of function performance areas included in the specific split area, and
when the specific split area on which the pointer is displayed is the split area including the input box of the plurality of split areas, the specific function performance area on which the pointer is displayed is any one of the input box for search or the input box for log-in in a plurality of specific function performance areas included in the specific split area.

12. The video display apparatus according to Claim 9, wherein the control unit (170) is configured to control that the first function performance area on which the pointer is displayed and the first split area including the specific function performance area are highlight-displayed.

13. The video display apparatus according to Claim 9, wherein:
the user input interface unit (150) is configured to receive at least one of a screen enlargement request signal and a screen split release request signal;
when the user input interface unit (150) receives a screen enlargement request signal, the control unit (170) is configured to control to enlarge a specific split area on which the pointer is displayed on the full screen according to the received screen enlargement request signal and to split the full screen into the plurality of split areas; and
when the user input interface unit (150) receives the screen split release request signal, the control unit (170) is configured to control to remove the screen split line and to display the browser screen according to the received screen split release request signal.

## Patentansprüche

1. Zeigerbewegungsverfahren in einer Videoanzeigevorrichtung, umfassend:
Empfangen eines Anforderungssignals zur Bildschirmaufteilung,
Anzeigen von Bildschirmaufteilungslinien, durch die ein Browser-Bildschirm in mehrere aufgeteilte Bereiche geteilt wird durch Partitionierung des Browser-Bildschirms in Antwort auf das Anforderungssignal zur Bildschirmaufteilung, und
Darstellen eines Zeigers auf einem ersten Funktionsausführungsbereich, der in einem ersten aufgeteilten Bereich der mehreren aufgeteilten Bereiche enthalten ist,
Empfangen eines Anforderungssignals zum Bereichswechsel, und
**gekennzeichnet durch**:
Darstellen des Zeigers, in Antwort auf das empfangene Anforderungssignal zum Bereichswechsel, auf einem zweiten Funktionsausführungsbereich, der in einem zweiten aufgeteilten Bereich der mehreren aufgeteilten Bereiche enthalten ist, wobei der zweite aufgeteilte Bereich mehrere Funktionsausführungsbereiche aufweist, die gemeinsam so angeordnet sind, dass einer dieser Funktionsausführungsbereiche in der Mitte der mehreren Funktionsausführungsbereiche angeordnet ist, und wobei der zweite Funktionsausführungsbereich der in der Mitte ist.

2. Zeigerbewegungsverfahren nach Anspruch 1,
wobei der erste und zweite Funktionsausführungsbereich ein beliebiges aus einem Hyperlink-Menü und einem Eingabefeld sind, und
wobei das Eingabefeld ein beliebiges aus einem Eingabefeld zur Suche oder einem Eingabefeld zum Einloggen ist.

3. Zeigerbewegungsverfahren nach Anspruch 2, bei dem:
der erste aufgeteilte Bereich, auf dem der Zeiger dargestellt wird, ein beliebiger aus einem aufgeteilten Bereich, der in einem mittleren Bereich des Browser-Bildschirms mit den mehreren aufgeteilten Bereichen angeordnet ist, und einem das Eingabefeld enthaltenden aufgeteilten Bereich ist, und
wenn der erste aufgeteilte Bereich, auf dem der Zeiger dargestellt wird, der das Eingabefeld enthaltende aufgeteilte Bereich aus den mehreren aufgeteilten Bereichen ist, der erste Funktionsausführungsbereich, auf dem der Zeiger dargestellt wird, ein beliebiger aus dem Eingabefeld zur Suche oder dem Eingabefeld zum Einloggen aus den mehreren Funktionsausführungsbereichen ist, die in dem ersten aufgeteilten Bereich enthalten sind, und
wenn der erste aufgeteilte Bereich, auf dem der Zeiger dargestellt wird, der in dem mittleren Bereich des Browser-Bildschirms mit den mehreren aufgeteilten Bereichen angeordnete aufgeteilte Bereich ist, der erste Funktionsausführungsbereich, auf dem der Zeiger dargestellt wird, ein Funktionsausführungsbereich ist, der in einem mittleren Bereich des Browser-Bildschirms mit den mehreren Funktionsausführungsbereichen angeordnet ist, die in dem ersten aufgeteilten Bereich enthalten sind.

4. Zeigerbewegungsverfahren nach Anspruch 1, bei dem die Funktionsausführungsbereiche, auf denen der Zeiger dargestellt wird, und die aufgeteilten Bereiche, in denen der Zeiger mit den Funktionsausführungsbereichen dargestellt wird, hervorgehoben dargestellt werden.

5. Zeigerbewegungsverfahren nach Anspruch 1, bei dem:
das Anforderungssignal zum Bereichswechsel ein Richtungstasteneingabesignal oder ein Zuordnungstasteneingabesignal umfasst, das eine bestimmte Zahlentaste oder mehrere Zahlentasten ist, die je einem der mehreren aufgeteilten Bereiche entsprechen,
wenn das Anforderungssignal zum Bereichswechsel das Richtungstasteneingabesignal ist, der Zeiger auf dem aufgeteilten Bereich dargestellt wird, der einer Richtung des Richtungstasteneingabesignals entspricht, und
wobei dann, wenn das Anforderungssignal zum Bereichswechsel das Zuordnungstasteneingabesignal ist, der Zeiger auf dem aufgeteilten Bereich dargestellt wird, der mit dem Zuordnungstasteneingabesignal korrespondiert.

6. Zeigerbewegungsverfahren nach Anspruch 1, ferner umfassend:
Empfangen eines Anforderungssignals zur Bildschirmvergrößerung,
Anzeigen des aufgeteilten Bereichs, auf dem der Zeiger dargestellt wird, auf dem Vollbildschirm durch Vergrößern des aufgeteilten Bereichs entsprechend dem Anforderungssignal zur Bildschirmvergrößerung, und
Darstellen des Zeigers auf dem Funktionsausführungsbereich, der in dem aufgeteilten Bereich der mehreren aufgeteilten Bereiche enthalten ist, durch Splitten des Vollbildschirms in die mehreren aufgeteilten Bereiche.

7. Zeigerbewegungsverfahren nach Anspruch 1, ferner umfassend:
Empfangen eines Anforderungssignals zur Beendigung der Bildschirmaufteilung, und
Entfernen der Bildschirmaufteilungslinie gemäß dem Anforderungssignal zur Beendigung der Bildschirmaufteilung.

8. Zeigerbewegungsverfahren nach Anspruch 7, ferner umfassend:
Empfangen eines Verschiebungsanforderungssignals, und
Darstellen des entsprechend dem Verschiebungsanforderungssignal in den Funktionsausführungsbereich verschobenen Zeigers.

9. Videoanzeigevorrichtung, mit:
einer zum Anzeigen eines Browser-Bildschirms konfigurierten Anzeigeeinheit (180),
einer Benutzereingabeschnittstelleneinheit (150), die zum Empfangen eines Bildschirmaufteilungsanforderungssignals und eines Bereichswechselanforderungssignals konfiguriert ist, und
einer Steuereinheit (170), die konfiguriert ist zum:
Anzeigen von Bildschirmaufteilungslinien, in die mehrere Bereiche auf der Anzeigeeinheit aufgeteilt werden durch Partitionieren des Browser-Bildschirms gemäß dem in der Benutzereingabeschnittstelleneinheit (150) empfangenen Bildschirmaufteilungsanforderungssignal, und
Darstellen eines Zeigers auf einem ersten Funktionsausführungsbereich, der in einem ersten aufgeteilten Bereich mehrerer aufgeteilter Bereiche enthalten ist, und
**dadurch gekennzeichnet, dass** die Steuereinheit (170) ferner dazu konfiguriert ist, in Antwort auf das durch die Benutzereingabeschnittstelleneinheit (150) empfangene Bereichswechselanforderungssignal den Zeiger auf einem zweiten Funktionsausführungsbereich darzustellen, der in einem zweiten aufgeteilten Bereich der mehreren aufgeteilten Bereiche enthalten ist, wobei der zweite aufgeteilte Bereich mehrere Funktionsausführungsbereiche hat, die gemeinsam so angeordnet sind, dass einer dieser Funktionsausführungsbereiche in der Mitte der mehreren Funktionsausführungsbereiche angeordnet ist, wobei der zweite Funktionsausführungsbereich der in der Mitte ist.

10. Videoanzeigevorrichtung nach Anspruch 9, bei der der erste aufgeteilte Bereich, auf dem der Zeiger dargestellt ist, ein in einem mittleren Bereich des Browser-Bildschirms mit den mehreren aufgeteilten Bereichen angeordneter aufgeteilter Bereich oder ein aufgeteilter Bereich mit einem Eingabefeld ist.

11. Videoanzeigevorrichtung nach Anspruch 10, bei der:
wenn der erste aufgeteilte Bereich, auf dem der Zeiger dargestellt ist, der in dem mittleren Bereich des Browser-Bildschirms mit den mehreren aufgeteilten Bereichen angeordnete aufgeteilte Bereich ist, der erste Funktionsausführungsbereich, auf dem der Zeiger dargestellt ist, ein Funktionsausführungsbereich ist, der in einem mittleren Bereich des Browser-Bildschirms mit den mehreren Funktionsausführungsbereichen angeordnet ist, die in dem bestimmten aufgeteilten Bereich enthalten sind, und
wenn der bestimmte aufgeteilte Bereich, auf dem der Zeiger dargestellt ist, der das Eingabefeld enthaltende aufgeteilte Bereich der mehreren aufgeteilten Bereiche ist, der bestimmte Funktionsausführungsbereich, auf dem der Zeiger dargestellt ist, ein beliebiger des Eingabefeldes zur Suche oder des Eingabefeldes zum Einloggen in mehreren bestimmten Funktionsausführungsbereichen ist, die in dem bestimmten aufgeteilten Bereich enthalten sind.

12. Videoanzeigevorrichtung nach Anspruch 9, bei der die Steuereinheit (170) dazu konfiguriert ist, zu steuern, dass der erste Funktionsausführungsbereich, auf dem der Zeiger dargestellt ist, und der erste aufgeteilte Bereich mit dem bestimmten Funktionsausführungsbereich hervorgehoben dargestellt werden.

13. Videoanzeigevorrichtung nach Anspruch 9, bei der:
die Benutzereingabeschnittstelleneinheit (150) dazu konfiguriert ist, ein Bildschirmvergrößerungsanforderungssignal und/oder ein Anforderungssignal zur Beendigung einer Bildschirmaufteilung zu empfangen,
wenn die Benutzereingabeschnittstelleneinheit (150) ein Bildschirmvergrößerungsanforderungssignal empfängt, die Steuereinheit (170) dazu konfiguriert ist, einen bestimmten aufgeteilten Bereich, auf dem der Zeiger dargestellt ist, entsprechend dem empfangenen Bildschirmvergrößerungsanforderungssignal auf dem Vollbildschirm zum Vergrößern anzusteuern und den Vollbildschirm in die mehreren aufgeteilten Bereiche zu splitten, und
wenn die Benutzereingabeschnittstelleneinheit (150) das Anforderungssignal zur Beendigung der Bildschirmaufteilung empfängt, die Steuereinheit (170) dazu konfiguriert ist, die Bildschirmaufteilungslinie zum Entfernen anzusteuern und den Browser-Bildschirm gemäß dem empfangenen Anforderungssignal zur Beendigung der Bildschirmaufteilung anzuzeigen.

## Revendications

1. Procédé de déplacement d'un pointeur dans un appareil d'affichage vidéo, comprenant les étapes consistant à :
recevoir un signal de demande de partage d'écran ;
afficher des lignes de partage d'écran grâce auxquelles un écran de navigation est divisé en une pluralité de zones de partage en partitionnant l'écran de navigation en réponse au signal de demande de partage d'écran ; et
afficher un pointeur sur une première zone d'exécution de fonction contenue dans une première zone de partage parmi la pluralité de zones de partage ;
recevoir un signal de demande de changement de zone ; et
**caractérisé par** l'étape consistant à :
en réponse au signal de demande de changement de zone reçu, afficher le pointeur sur une deuxième zone d'exécution de fonction contenue dans une deuxième zone de partage parmi la pluralité de zones de partage, dans lequel la deuxième zone de partage présente une pluralité de zones d'exécution de fonction agencées mutuellement de sorte que l'une de ces zones d'exécution de fonction est placée au centre de la pluralité de zones d'exécution de fonction, et dans lequel la deuxième zone d'exécution de fonction est celle se trouvant au centre.

2. Procédé de déplacement d'un pointeur selon la revendication 1,
dans lequel les première et deuxième zones d'exécution de fonction sont l'un quelconque parmi un menu hyperlien et une boîte de saisie, et
dans lequel la boîte de saisie est l'une quelconque parmi une boîte de saisie pour la recherche ou une boîte de saisie pour l'ouverture d'une session.

3. Procédé de déplacement d'un pointeur selon la revendication 2, dans lequel :
la zone de partage sur laquelle le pointeur est affiché est l'une quelconque parmi une zone de partage située sur une zone centrale de l'écran de navigation comprenant la pluralité de zones de partage et une zone de partage incluant la boîte de saisie ; et
lorsque la première zone de partage sur laquelle le pointeur est affiché est la zone de partage incluant la boîte de saisie parmi la pluralité de zones de partage, la première zone d'exécution de fonction sur laquelle le pointeur est affiché est l'une quelconque parmi la boîte de saisie pour la recherche ou la boîte de saisie pour l'ouverture d'une session dans la pluralité de zones d'exécution de fonction contenue dans la première zone de partage ; et
lorsque la première zone de partage sur laquelle le pointeur est affiché est la zone de partage placée sur la zone centrale de l'écran de navigation comprenant la pluralité de zones de partage, la première zone d'exécution de fonction sur laquelle le pointeur est affiché est une zone d'exécution de fonction placée sur une zone centrale de l'écran de navigation comprenant la pluralité de zones d'exécution de fonction contenues dans la première zone de partage.

4. Procédé de déplacement d'un pointeur selon la revendication 1, dans lequel les zones d'exécution de fonction sur lesquelles le pointeur est affiché et les zones de partage dans lesquelles le pointeur est affiché contenant les zones d'exécution de fonction sont mises en évidence.

5. Procédé de déplacement d'un pointeur selon la revendication 1, dans lequel :
le signal de demande de changement de zone comprend l'un parmi un signal d'entrée de touche de direction ou un signal d'entrée de touche de mappage qui est une touche numérique spécifique parmi une pluralité de touches numériques correspondant chacune à l'une parmi la pluralité de zones de partage ;
lorsque le signal de demande de changement de zone est le signal d'entrée de touche de direction, le pointeur est affiché sur la zone de partage correspondant à une direction du signal d'entrée de touche de direction ; et
dans lequel lorsque le signal de demande de changement de zone est le signal d'entrée de touche de mappage, le pointeur est affiché sur la zone de partage correspondant au signal d'entrée de touche de mappage.

6. Procédé de déplacement d'un pointeur selon la revendication 1, comprenant en outre les étapes consistant à :
recevoir un signal de demande d'agrandissement d'écran ;
afficher la zone de partage sur laquelle le pointeur est affiché en plein écran en agrandissant la zone de partage conformément au signal de demande d'agrandissement d'écran ; et
afficher le pointeur sur la zone d'exécution de fonction contenue dans la zone de partage parmi la pluralité de zones de partage en partageant le plein écran en une pluralité de zones de partage.

7. Procédé de déplacement d'un pointeur selon la revendication 1, comprenant en outre les étapes consistant à :
recevoir un signal de demande de libération de partage d'écran ; et
supprimer la ligne de partage d'écran conformément au signal de demande de libération de partage d'écran.

8. Procédé de déplacement d'un pointeur selon la revendication 7, comprenant en outre les étapes consistant à :
recevoir un signal de demande de déplacement ; et
afficher le pointeur déplacé dans la zone d'exécution de fonction correspondant au signal de demande de déplacement.

9. Appareil d'affichage vidéo, comprenant :
une unité d'affichage (180) configurée pour afficher un écran de navigation,
une unité d'interface d'entrée utilisateur (150) configurée pour recevoir un signal de demande de partage d'écran et un signal de demande de changement de zone, et
une unité de commande (170) configurée pour commander :
l'affichage des lignes de partage d'écran grâce auxquelles une pluralité de zones sont partagées sur l'unité d'affichage en partitionnant l'écran de navigation conformément au signal de demande de partage d'écran reçu dans l'unité d'interface d'entrée utilisateur (150), et
l'affichage d'un pointeur sur une première zone d'exécution de fonction contenue dans une première zone de partage parmi une pluralité de zones de partage ; et
**caractérisé en ce que** le contrôleur (170) est en outre configuré pour, en réponse au signal de demande de changement de zone reçu par l'unité d'interface d'entrée utilisateur (150), afficher le pointeur sur une deuxième zone d'exécution de fonction contenue dans une deuxième zone de partage parmi la pluralité de zones de partage, dans lequel la deuxième zone de partage présente une pluralité de zones d'exécution de fonction mutuellement agencées de sorte que l'une de ces zones d'exécution de fonction est placée au centre de la pluralité de zones d'exécution de fonction, et dans lequel la deuxième zone d'exécution de fonction est celle se trouvant au centre.

10. Appareil d'affichage vidéo selon la revendication 9, dans lequel la première zone de partage sur laquelle le pointeur est affiché est l'une parmi une zone de partage placée sur une zone centrale de l'écran de navigation comprenant la pluralité de zones de partage et une zone de partage incluant une boîte de saisie.

11. Appareil d'affichage vidéo selon la revendication 10, dans lequel :
lorsque la première zone de partage sur laquelle le pointeur est affiché est la zone de partage placée sur la zone centrale de l'écran de navigation comprenant la pluralité de zones de partage, la première zone d'exécution de fonction sur laquelle le pointeur est affiché est une zone d'exécution de fonction placée sur une zone centrale de l'écran de navigation comprenant la pluralité de zones d'exécution de fonction contenues dans la zone de partage spécifique, et
lorsque la zone de partage spécifique sur laquelle le pointeur est affiché est la zone de partage incluant la boîte de saisie parmi la pluralité de zones de partage, la zone d'exécution de fonction spécifique sur laquelle le pointeur est affiché est l'une quelconque parmi la boîte de saisie pour une recherche ou la boîte de saisie pour une ouverture de session dans une pluralité de zones d'exécution de fonction spécifique contenues dans la zone de partage spécifique.

12. Appareil d'affichage vidéo selon la revendication 9, dans lequel l'unité de commande (170) est configurée pour commander de sorte que la première zone d'exécution de fonction sur laquelle le pointeur est affiché et la première zone de partage incluant la zone d'exécution de fonction spécifique sont mises en évidence.

13. Appareil d'affichage vidéo selon la revendication 9, dans lequel :
l'unité d'interface d'entrée utilisateur (150) est configurée pour recevoir au moins l'un parmi un signal de demande d'agrandissement d'écran et un signal de demande de libération de partage d'écran ;
lorsque l'unité d'interface d'entrée utilisateur (150) reçoit un signal de demande d'agrandissement d'écran, l'unité de commande (170) est configurée pour commander l'agrandissement d'une zone de partage spécifique sur laquelle le pointeur est affiché en plein écran conformément au signal de demande d'agrandissement d'écran reçu et le partage du plein écran en la pluralité de zones de partage ; et
lorsque l'unité d'interface d'entrée utilisateur (150) reçoit le signal de demande de libération de partage d'écran, l'unité de commande (170) est configurée pour commander la suppression de la ligne de partage d'écran et l'affichage de l'écran de navigation conformément au signal de demande de libération de partage d'écran reçu.
